(19) Europäisches Patentamt
European Patent Office
Office européen des brevets

(11) **EP 4 331 714 A1**

(12) **EUROPEAN PATENT APPLICATION**
published in accordance with Art. 153(4) EPC

(43) Date of publication:
06.03.2024 Bulletin 2024/10

(21) Application number: 22795915.2

(22) Date of filing: 28.04.2022

(51) International Patent Classification (IPC):
$B01D\ 69/00^{(2006.01)}$      $B01D\ 69/08^{(2006.01)}$
$B01D\ 71/10^{(2006.01)}$      $B01D\ 71/34^{(2006.01)}$
$B01D\ 71/38^{(2006.01)}$      $B01D\ 71/40^{(2006.01)}$
$B01D\ 71/44^{(2006.01)}$      $B01D\ 71/52^{(2006.01)}$
$D01F\ 6/00^{(2006.01)}$       $D01F\ 6/08^{(2006.01)}$
$D01F\ 6/12^{(2006.01)}$       $C08J\ 9/28^{(2006.01)}$
$C08J\ 9/42^{(2006.01)}$

(52) Cooperative Patent Classification (CPC):
B01D 69/00; B01D 69/08; B01D 71/10;
B01D 71/34; B01D 71/38; B01D 71/40;
B01D 71/44; B01D 71/52; C08J 9/28; C08J 9/42;
D01F 6/00; D01F 6/08; D01F 6/12

(86) International application number:
PCT/JP2022/019447

(87) International publication number:
WO 2022/231002 (03.11.2022 Gazette 2022/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.04.2021   JP 2021075668
30.06.2021   JP 2021108523
27.08.2021   JP 2021138656

(71) Applicant: Toray Industries, Inc.
Tokyo 103-8666 (JP)

(72) Inventors:
• KOBAYASHI, Kentaro
Otsu-shi, Shiga 520-8558 (JP)
• IWAI, Kenta
Otsu-shi, Shiga 520-8558 (JP)
• KOZAKI, Yoichiro
Otsu-shi, Shiga 520-8558 (JP)
• KANAMORI, Satoko
Otsu-shi, Shiga 520-8558 (JP)
• TACHIBANA, Takashi
Otsu-shi, Shiga 520-8558 (JP)

(74) Representative: Hoefer & Partner Patentanwälte
mbB
Pilgersheimer Straße 20
81543 München (DE)

(54) **HOLLOW FIBER MEMBRANE AND MANUFACTURING METHOD THEREFOR**

(57)    The present invention relates to a hollow fiber membrane in which the thickness L of a spherical structure layer is 60-500 $\mu$m (inclusive), the spherical structure layer has a first surface and a second surface, the average diameter Dai of the spherical structure in a region $Sa_1$ 10 $\mu$m or less from the first surface and the average diameter $Db_2$ of the spherical structure in a region $Sb_2$ 10-20 $\mu$m from the second surface satisfy the relational expression $Da_1 > Dbz$, and the spherical structure satisfies certain parameters.

EP 4 331 714 A1

**(Cont. next page)**

## FIG. 1

(a)

FIRST SURFACE

$Sa_1$ $Ma_1$

$Ma_2$

$Sa_2$

$Ma_3$

10 μm

10 μm

$Sa_n$ $Ma_n$

$Ma_{n+1}$

10 μm

15.0kV ×1.00k SE          50.0μm

L μm

(b)

$Sb_n$ $Mb_{n+1}$

$Ma_n$

10 μm

$Sb_2$ $Mb_3$

$Sb_1$ $Mb_2$

$Mb_1$

10 μm

10 μm

×1.00k SE          50.0μm

SECOND SURFACE

**Description**

TECHNICAL FIELD

The present invention relates to a hollow fiber membrane and a method for manufacturing the same.

BACKGROUND ART

A separation membrane such as a microfiltration membrane or an ultrafiltration membrane is used for the purpose of clarification, concentration, and separation in water treatment applications or food/pharmaceutical applications, but in recent years, along with expansion of an applicable range of the separation membrane, an application to a liquid to be filtered having a high degree of filtration difficulty or an application in which highly accurate separation is required has been studied, and there has been a further increasing demand for a separation membrane having both filterability and separability.

Patent Literature 1 discloses a hollow fiber membrane which is a porous hollow fiber membrane containing a vinylidene fluoride-based resin, the hollow fiber membrane having an inclined structure in which a pore diameter of pores in the hollow fiber membrane is gradually reduced toward at least one side of inner and outer peripheral surfaces. In addition, it is described that the hollow fiber membrane has excellent transmission performance, fraction characteristics, and strength.

Patent Literature 2 discloses a hollow fiber membrane having a spherical structure formed from a polyvinylidene fluoride-based resin by a thermally induced phase separation method and having a spherical structure larger than the vicinity of an inner surface within 10 $\mu$m from the outer surface. It is described that by having a large spherical structure in the vicinity of the outer surface, clogging hardly occurs, high water permeability is continuously maintained, and high strength is exhibited in a homogeneous layer of the inner layer.

Further, Patent Literature 2 discloses a method for manufacturing such a membrane, in which a temperature gradient in a thickness direction of the separation membrane is applied to a polyvinylidene fluoride-based resin solution before solidification. Specifically, it is described that by heating a spinneret for forming into a hollow fiber shape, the spherical structure of a surface on a heated side is coarsened.

CITATION LIST

PATENT LITERATURE

   Patent Literature 1: WO2015/146469
   Patent Literature 2: WO2016/006611

SUMMARY OF INVENTION

TECHNICAL PROBLEM

The hollow fiber membrane disclosed in Patent Literature 1 has a three-dimensional network structure in which a pore diameter of the pores in the hollow fiber membrane is gradually reduced toward one side. Such a membrane is inferior in strength and is not suitable for operation of applying a large load to a membrane such as external pressure cross flow filtration. In addition, since such a membrane has a very thin layer having a separation function, the separation function is easily reduced by damage to the membrane during operation. Therefore, it is difficult to maintain a stable separation function for a long period of time.

The membrane of Patent Literature 2 has a relatively small and homogeneous spherical structure inside thereof, and thus can block components in the liquid, thereby maintaining separation performance for a long time. In addition, since a large spherical structure is present in the vicinity of the outer surface, clogging components (components causing clogging) can be captured inside. On the other hand, a region where the clogging component can be captured is present only in the vicinity of the outer surface. Therefore, depending on a liquid to be filtered, especially a liquid containing a large amount of turbidity components and organic substances, and conditions such as operation time, there is a problem that a time during which the water permeability can be maintained is shortened. On the other hand, there is a demand for extending the time during which the water permeability can be maintained even in a liquid difficult to be filtered.

An object of the present invention is to provide a hollow fiber membrane capable of maintaining separability and water permeability in the hollow fiber membrane using a polyvinylidene fluoride-based resin, and a method for manufacturing the same.

SOLUTION TO PROBLEM

In order to achieve the above object, the present invention includes the following aspects 1 to 19.

1. A hollow fiber membrane including a layer of a spherical structure of a resin, in which

the layer of the spherical structure has a thickness L of 60 $\mu$m or more and 500 $\mu$m or less,
the layer of the spherical structure has a first surface and a second surface,
an average diameter $Da_n$ of the spherical structure in a region $Sa_n$ of $10 \times (n - 1)$ to $10 \times n$ $\mu$m from the first surface and an average diameter $Db_n$ of the spherical structure in a region $Sb_n$ of $10 \times (n - 1)$ to $10 \times n$ $\mu$m from the second surface satisfy a relation of $Da_1 > Db_2$, and
a minimum value $i_{min}$ of a natural number i satisfying the following conditions (1) and (2) satisfies a relation of $3 \le i_{min} \le (L - 20)/10$,

$$(1)\ Da_1/Da_i \ge 1.1$$

$$(2)\ \text{-}0.3\ \mu m \le Da_i - Db_2 \le 0.3\ \mu m$$

provided that n is a natural number, and in the relation of $3 \le i_{min} \le (L - 20)/10$, a decimal point or less of $(L - 20)/10$ is truncated.

2. The hollow fiber membrane according to 1, in which

a relation of $i_{min} < L \times 0.75/10$ is satisfied,
provided that in the relation of $i_{min} \le L \times 0.75/10$, a decimal point or less of $L \times 0.75/10$ is truncated.

3. The hollow fiber membrane according to 1 or 2, in which
a relation of $1.10 < Da_1/Da_{imin} < 4.00$ is satisfied.
4. The hollow fiber membrane according to any one of 1 to 3, in which
a relation of $0.50\ \mu m < Db_2 < 2.00\ \mu m$ is satisfied.
5. The hollow fiber membrane according to any one of 1 to 4, in which
a relation of $1.00 \le Da_1/Da_2 \le 1.10$ is satisfied.
6. The hollow fiber membrane according to any one of 1 to 5, in which
the first surface is on a side of liquid to be filtered.
7. The hollow fiber membrane according to any one of 1 to 6, in which
the first surface is an outer surface of the hollow fiber membrane.
8. The hollow fiber membrane according to any one of 1 to 7, in which

when a throat diameter obtained by a pore network model analysis for the hollow fiber membrane is defined as a constriction diameter of a spherical structure gap,
an average diameter $da_n$ of the constriction diameter of the spherical structure gap in the region $Sa_n$ of $10 \times (n - 1)$ to $10 \times n$ $\mu$m from the first surface, and
an average diameter $db_n$ of the constriction diameter of the spherical structure gap in the region $Sb_n$ of $10 \times (n - 1)$ to $10 \times n$ $\mu$m from the second surface satisfy a relation of $da_1 > db_2$, and
a minimum value $j_{min}$ of a natural number j satisfying the following conditions (1) and (2) satisfies a relation of $3 \le j_{min} \le (L - 20)/10$,

$$(1)\ da_1/da_j \ge 1.15$$

$$(2)\ da_j - db_2 \le 0.10\ \mu m$$

provided that in the relation of $3 \le j_{min} \le (L - 20)/10$, a decimal point or less of $(L - 20)/10$ is truncated.

9. The hollow fiber membrane according to 8, in which

a relation of $j_{min} < L \times 0.5/10$ is satisfied,
provided that in the relation of $j_{min} \leq L \times 0.5/10$, a decimal point or less of $L \times 0.5/10$ is truncated.

10. The hollow fiber membrane according to 8 or 9, in which

the number of throats $Na_n$ in the region $Sa_n$ and the number of throats $Nb_n$ in the region $Sb_n$ obtained by the pore network model analysis satisfy a relation of $Na_1 < Nb_2$, and
a minimum value $k_{min}$ of a natural number k satisfying the following conditions (3) and (4) satisfies a relation of $3 \leq k_{min} < (L - 20)/10$,

$$(3) \ Na_1/Na_k \leq 0.90$$

$$(4) \ Nb_2 - Na_k \leq 400$$

provided that in the relation of $3 \leq k_{min} \leq (L - 20)/10$, a decimal point or less of $(L - 20)/10$ is truncated, and
an analysis region in the analysis is a cuboid including an arbitrary 50 $\mu$m square of the first surface and 50 $\mu$m square of the second surface facing the first surface.

11. The hollow fiber membrane according to any one of 8 to 10, in which
a relation of $0.10 \ \mu m < db_2 < 10.0 \ \mu m$ is satisfied.
12. The hollow fiber membrane according to any one of 1 to 11, in which

the spherical structure includes a polyvinylidene fluoride-based resin,
a hydrophilic polymer is present on a surface and inside of the spherical structure, and
the hydrophilic polymer is contained in an amount of 1.0 parts by mass or more with respect to 100 parts by mass of the polyvinylidene fluoride-based resin.

13. The hollow fiber membrane according to 12, in which
a percentage of a ratio P1/P0 of P1 to P0 is 70% or less, where P1 is a ratio (mass%) of the hydrophilic polymer to the polyvinylidene fluoride-based resin after the hollow fiber membrane is immersed in a 3,000 ppm of aqueous sodium hypochlorite solution (pH 12.5) at 60°C for 30 hours, and P0 is a ratio (mass%) of the hydrophilic polymer to the polyvinylidene fluoride-based resin before the immersion.
14. A method for manufacturing a hollow fiber membrane, the method including:

(a) a step of dissolving a polyvinylidene fluoride-based resin in a poor solvent to obtain a polyvinylidene fluoride-based resin solution;
(b) a step of maintaining the polyvinylidene fluoride-based resin solution at a temperature at which primary nucleus formation progresses;
(c) a step of discharging the polyvinylidene fluoride-based resin solution in a hollow fiber shape through a pipe and a spinneret, and applying a temperature gradient to the polyvinylidene fluoride-based resin solution in a thickness direction thereof in at least one of the pipe or the spinneret, after step (b); and
(d) a step of immersing the polyvinylidene fluoride-based resin solution in a cooling bath, thereby solidifying the polyvinylidene fluoride-based resin solution by solid-liquid type thermally induced phase separation, after step (c), in which

a temperature gradient $\Delta T$ (°C) applied in step (c) and a time t (sec) for applying the temperature gradient satisfy a relation of $50 \leq \Delta T \times t \leq 300$.
15. The method for manufacturing a hollow fiber membrane according to 14, in which
in step (c), with respect to a thickness L of a layer of a spherical structure, a thickness Ls of the polyvinylidene fluoride-based resin to which the temperature gradient is applied satisfies a relation of $5 < Ls/L < 40$.
16. The method for manufacturing a hollow fiber membrane according to 14 or 15, in which
a temperature T2 (°C) in step (b), a temperature T4 (°C) in the cooling bath in step (d), and a crystallization temperature Tc (°C) of the polyvinylidene fluoride-based resin satisfy a relation of $(Tc - T4)/(T2 - T4) < 0.50$.
17. The method for manufacturing a hollow fiber membrane according to 16, in which

a relation of 15 < Tc - T4 < 35 is satisfied.

18. The method for manufacturing a hollow fiber membrane according to any one of 14 to 17, the method further including the following steps (e) and (f) after step (d):

(e) a step of introducing a hydrophilic polymer into the hollow fiber membrane; and
(f) a step of performing heat treatment at 100°C or higher after step (e).

19. The method for manufacturing a hollow fiber membrane according to 18, in which

in step (e), after an aqueous solution in which the hydrophilic polymer is dissolved is passed through the hollow fiber membrane, radiation ray irradiation is performed.

ADVANTAGEOUS EFFECTS OF INVENTION

According to the present invention, it is possible to provide a hollow fiber membrane capable of maintaining separability and water permeability, and a method for manufacturing the same.

BRIEF DESCRIPTION OF DRAWINGS

Fig. 1 is an electron microscopic photograph of the vicinity of a first surface and a second surface in a radial direction cross section of a hollow fiber membrane.
Fig. 2 is a schematic diagram illustrating a method of calculating an average diameter of a spherical structure.
Fig. 3 is a diagram showing a result of measuring the average diameter of the spherical structure to a distance from the first surface.
Fig. 4A and Fig. 4B are diagrams illustrating a pore network model analysis image of the hollow fiber membrane.
Fig. 5 is a top view illustrating a specific example of a configuration of a spinneret used for manufacturing the hollow fiber membrane.
Fig. 6 is an A-A cross-sectional view of the spinneret illustrated in Fig. 5.
Fig. 7 is a bottom view of the spinneret illustrated in Fig. 5.
Fig. 8 is a diagram illustrating an example of a shape of a pipe.

DESCRIPTION OF EMBODIMENTS

Hereinafter, embodiments of the present invention will be described, but the present invention is not limited to the following embodiments and can be freely modified and implemented without departing from the gist of the present invention. In the present description, a weight reference ratio (percentage, part, etc.) is the same as a mass reference ratio (percentage, part, etc.).

A hollow fiber membrane according to an embodiment of the present invention has a spherical structure layer of resin. In the hollow fiber membrane, a thickness L of the spherical structure layer is 60 $\mu$m or more and 500 $\mu$m or less. The spherical structure layer has a first surface and a second surface, an average diameter $Da_n$ of the spherical structure in a region $Sa_n$ of $10 \times (n - 1)$ to $10 \times n$ $\mu$m from the first surface and an average diameter $Db_n$ of the spherical structure in a region $Sb_n$ of $10 \times (n - 1)$ to $10 \times n$ $\mu$m from the second surface satisfy Dai > Dbz, a minimum value $i_{min}$ of a natural number i satisfying the following conditions (1) and (2) satisfies $3 \le i_{min} \le (L - 20)/10$,

$$(1)\ Da_1/Da_i \geq 1.1$$

$$(2)\ \text{-}0.3\ \mu m \leq Da_i - Db_2 \leq 0.3\ \mu m$$

in the formula, the n is a natural number, and in $3 \le i_{min} < (L - 20)/10$, a decimal point or less of (L - 20)/10 is truncated.

<Hollow Fiber Membrane>

The hollow fiber membrane according to the embodiment of the present invention has a spherical structure layer of resin. The hollow fiber membrane may include only the spherical structure layer or may have another layer. The spherical structure layer of resin refers to a spherical structure layer composed of a resin.

The resin constituting the spherical structure layer is preferably a thermoplastic resin including a chain high molecule and is particularly preferably a polyvinylidene fluoride-based resin because of high chemical resistance thereof. Here, the polyvinylidene fluoride-based resin means a resin containing at least one of a vinylidene fluoride homopolymer and a vinylidene fluoride copolymer. The polyvinylidene fluoride-based resin may contain a plurality of types of vinylidene fluoride copolymers. In other words, the spherical structure is preferably made of the polyvinylidene fluoride-based resin. The phrase "the spherical structure is made of the polyvinylidene fluoride-based resin" means that a thermoplastic resin component constituting the spherical structure is substantially composed of the polyvinylidene fluoride-based resin. In the case where the spherical structure is made of the polyvinylidene fluoride-based resin, other than the thermoplastic resin, other resins miscible with the thermoplastic resin and polyhydric alcohols or surfactants may be contained in a ratio of 50% by weight or less. In addition, the spherical structure may contain impurities inevitably contained in addition to those, and a content of the impurities is, for example, preferably 1% by weight or less.

The vinylidene fluoride copolymer is a polymer having a vinylidene fluoride residue structure, and is typically a copolymer of a vinylidene fluoride monomer and another fluorine-based monomer. Examples of another fluorine-based monomer include one or more kinds of monomers selected from the group consisting of a vinyl fluoride, a tetrafluoroethylene, a hexafluoropropylene, and a chlorotrifluoroethylene. As a monomer other than the fluorine-based monomer, for example, a monomer such as ethylene may be copolymerized to the extent that the effect of the present invention is not impaired.

Other than the thermoplastic resin, the spherical structure layer may contain other resins miscible with the thermoplastic resin and polyhydric alcohols or surfactants in a ratio of 50% by weight or less.

In the present description, the "spherical structure" refers to solid portions having a substantially circular cross section perpendicular to a length direction of the hollow fiber membrane (that is, parallel to a radial direction of the hollow fiber membrane) and a structure formed by connecting the solid portions as described later. When not referring to the entire structure, but particularly referring to a portion having a substantially circular cross section, the term "solid portion" may be used. The substantially circular shape includes a perfect circle and an ellipse. The solid portions are connected to one another by sharing a part thereof in a surface direction and the thickness direction of the separation membrane (hollow fiber membrane). A shape of the cross section parallel to the length direction of the hollow fiber membrane is not particularly limited and may be any shape such as a substantially circular shape or a columnar shape.

Since the separation membrane (hollow fiber membrane) has the spherical structure, the separation membrane exhibits high strength elongation and also exhibits high water permeability by containing voids between spherical solid portions.

During filtration, a first surface is preferably disposed upstream in the filtration direction, and a second surface is preferably disposed downstream in the filtration direction. The filtered liquid preferably flows from the first surface toward the second surface. In other words, the first surface is preferably on a side of liquid to be filtered. That is, when used for so-called external pressure filtration, an outer surface of the hollow fiber membrane is the first surface and an inner surface of the hollow fiber membrane is the second surface, and when used for internal pressure filtration, the inner surface of the hollow fiber membrane is the first surface and the outer surface of the hollow fiber membrane is the second surface.

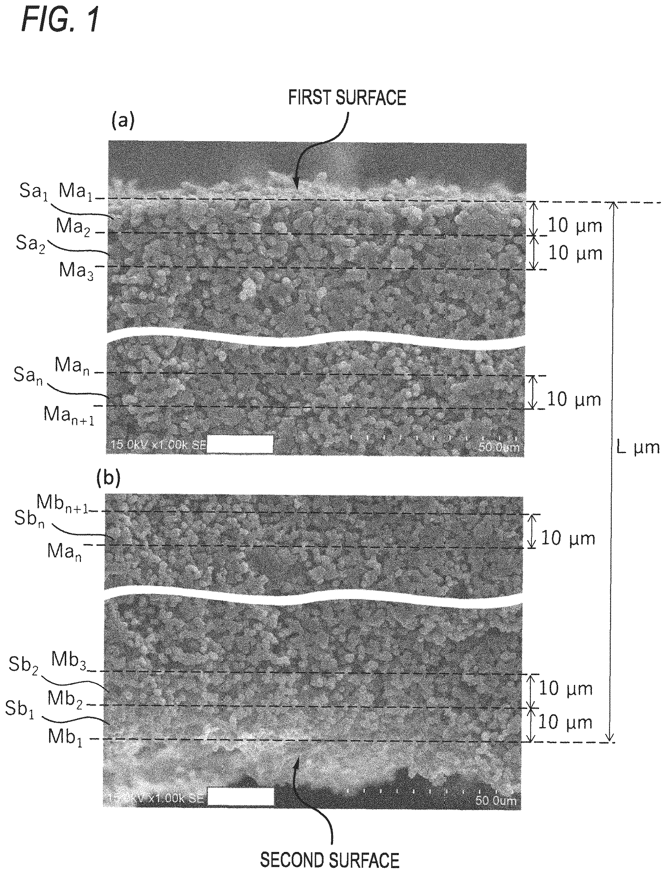

Next, a diameter of the spherical structure corresponding to a position in the thickness direction of the hollow fiber membrane will be described with reference to Fig. 1.

Hereinafter, for convenience, the outer surface of the hollow fiber membrane is referred to as the first surface and the inner surface of the hollow fiber membrane is referred to as the second surface. Fig. 1 is an electron microscopic photograph in a radial direction cross section of the hollow fiber membrane, in which (a) shows the vicinity of the first surface and (b) shows the vicinity of the second surface.

In the cross section, regions divided from the first surface by every 10 $\mu$m, from 0 $\mu$m to 10 $\mu$m, from 10 $\mu$m to 20 $\mu$m, ..., from $10 \times (1 - n)$ $\mu$m to $10 \times n$ $\mu$m, ..., are denoted by reference numerals $Sa_1$, $Sa_2$, ..., $Sa_n$, ..., respectively. In addition, regions divided from the second surface by every 10 $\mu$m, from 0 $\mu$m to 10 $\mu$m, from 10 $\mu$m to 20 $\mu$m, ..., from $10 \times (1 - n)$ $\mu$m to $10 \times n$ $\mu$m, ..., ..., are denoted by reference numerals $Sb_1$, $Sb_2$, ..., $Sb_n$, respectively. That is, the region of $10 \times (n - 1)$ to $10 \times n$ $\mu$m from the first surface is $Sa_n$, and the region of $10 \times (n - 1)$ to $10 \times n$ $\mu$m from the second surface is $Sb_n$. Here, n is a natural number.

As shown in Fig. 1, a photograph is taken so that an arc as the first surface of the hollow fiber membrane can be confirmed. At this time, a tangent line of a central portion of the arc forming the first surface is aligned with a horizontal direction in the photograph. In the obtained photograph, a straight line $Ma_1$ passing through an intersection between the arc forming the first surface and left and right ends of the photograph is drawn. The straight line $Ma_1$ is preferably parallel to the horizontal direction of the photograph but may be inclined.

Further, a straight line $Ma_2$ parallel to the straight line is drawn at a position 10 $\mu$m closer to the second surface than the straight line $Ma_1$. Similarly, straight lines $Ma_3$, $Ma_4$, ..., $Ma_n$ are drawn. The region $Sa_1$ is a region between the straight lines $Ma_1$ and $Ma_2$. The straight line $Ma_n$ is parallel to the straight line $Ma_1$ and is a straight line drawn at a position $10 \times n$ $\mu$m ahead of the straight line $Ma_1$ in a second surface direction. The region $Sa_n$ is a region between the

straight line $Ma_n$ and the straight line $Ma_{(n+1)}$ in the photograph.

Similarly, a photograph is taken so that the arc can be confirmed on the second surface. At this time, a tangent line of a central portion of the arc forming the second surface is aligned with a horizontal direction in the photograph. In the obtained photograph, a straight line $Mb_1$ passing through an intersection between the arc forming the first surface and left and right ends of the photograph is drawn. The straight line Mb1 is preferably parallel to the horizontal direction of the photograph but may be inclined.

Further, similarly to the straight line $Ma_n$, a straight line is drawn at an interval of 10 $\mu$m from the second surface. That is, the straight line $Mb_2$ parallel to the straight line $Mb_1$ is drawn at a position 10 $\mu$m closer to the first surface than the straight line $Mb_1$. By repeating the same operation, the straight lines $Mb_3$, ..., and $Mb_n$ can be drawn. The region $Sb_n$ is a region between the straight lines $Mb_n$ and $Mb_{(n+1)}$.

An average diameter $Da_n$ of the spherical structure in the region $Sa_n$ and an average diameter $Db_n$ of the spherical structure in the region $Sb_n$ are calculated as follows.

First, an electron microscopic photograph of the cross section in the radial direction is photographed. A magnification ratio at the time of photographing is not particularly limited as long as the magnification ratio is a magnification capable of measuring 15 or more spherical structures. For example, when the average diameter of the spherical structure is 1 to 3 $\mu$m, observation at 1,000 times to 5,000 times is preferable to ensure a sufficient number of spherical structures for calculating the average diameter.

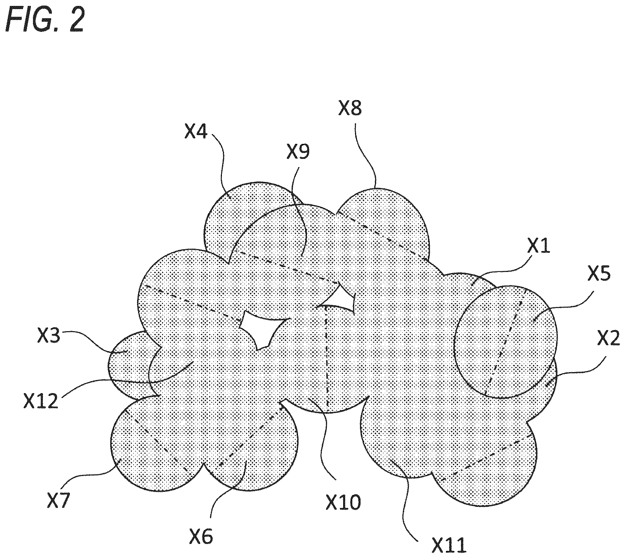

A solid portion that overlaps another sphere in a photographing direction (a direction perpendicular to a paper surface of Figs. 1 and 2) and that is located deeper than the another sphere is excluded from the measurement target. Note that the solid portion located deeper than the another sphere is exemplified as X1 to X4 in Fig. 2. In addition, a solid portion interrupted at an outer edge of the photographed image is also excluded from the measurement target.

Among the remaining solid portions, as in a solid portion X5 shown in Fig. 2, a solid portion that is not connected to other solid portions, that is, a solid portion in which the entire contour can be confirmed, is measured for a long diameter thereof (indicated by a chain line in Fig. 2).

On the other hand, a part of the contour line cannot be confirmed for a solid portion connected to other solid portions. When only a part of the contour line of the solid portion can be confirmed, a whole image is estimated and then measured as follows. In spheres X6, X7, and the like having a continuous contour line, the longest line segment where both ends are located on the contour line is drawn, and a length thereof is set as a long diameter. In X8 to X10 having intermittent contour lines, the longest line segment where both ends are located on one or two contour lines is taken as the long diameter. However, in the case of the following (A) or (B), the corresponding solid portion is excluded from the measurement target.

(A) In a case where the contour line that can be confirmed is less than 50% of the substantially circular entire contour line estimated for the solid portion (for example, X11 and X12).

(B) In a case where both ends of the line segment are located on both ends of one continuous contour line (for example, X8).

When the structure is interrupted at an end of the electron microscopic photograph used for determination, a spherical structure diameter of the structure at the end is not measured. In this manner, the spherical structure diameter (the long diameter of the spherical structure) in each solid portion as the measurement target is measured, an arithmetical average of the spherical structure diameters is calculated, and the average diameter $Da_n$ of the spherical structures in the region $Sa_n$ and the average diameter $Db_n$ of the spherical structures in the region $Sb_n$ are obtained.

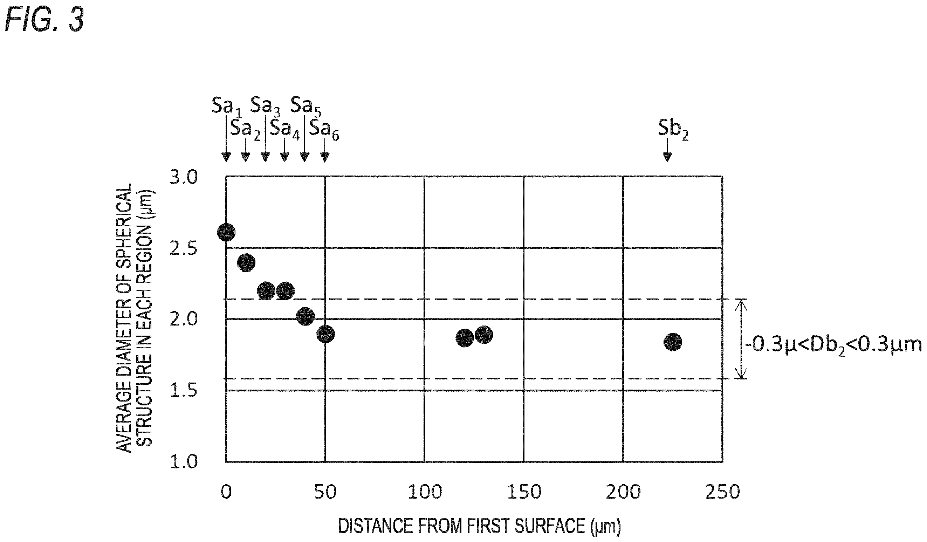

Fig. 3 shows results of measuring the average diameter of the spherical structures in the thickness direction in Fig. 1. A horizontal axis represents a distance in the thickness direction from the first surface, and a vertical axis represents the average diameter of the spherical structures in each region. For convenience of drawing, the average diameter $Da_n$ is plotted at a position at a distance of $10 \times (n - 1)$ $\mu$m from the first surface, and for example, the average diameter $Da_3$ of the region $Sa_3$ is plotted at a position at a distance of 20 $\mu$m in the thickness direction.

The average diameter Dai of the spherical structure in the region $Sa_1$ and the average diameter $Db_2$ of the region $Sb_2$ satisfy a relation of Dai > $Db_2$. The average diameter Dai of the region $Sa_1$ in the vicinity of the first surface is larger than the average diameter $Db_2$ of the region $Sb_2$ in the vicinity of the second surface, so that a liquid permeation resistance in the vicinity of the first surface is reduced, and thus the water permeability is improved.

The inventors further found that a minimum value $i_{min}$ of a natural number i satisfying the following conditions (1) and (2) is $3 < i_{min} \leq (L - 20)/10$, whereby the water permeability and the separability are maintained for a long time. In $3 \leq i_{min} \leq (L - 20)/10$, a decimal point or less of (L - 20)/10 is truncated. Also, as will be described later, L represents a thickness of the spherical structure layer.

$$(1)\ Da_1/Da_i \geq 1.1$$

$$(2)\ {-}0.3\ \mu m \le Da_i - Db_2 \le 0.3\ \mu m$$

The fact that the value $i_{min}$ is within the above range means that the region $Sa_i$ having an average diameter smaller than the average diameter Dai in the region closest to the first surface and equal to the average diameter Dbz of the spherical structure of the region $Sb_2$ is located closer to the second surface than $Sa_2$. Accordingly, a clogging component can be more widely dispersed in the thickness direction of the membrane. As a result, an operation period can be lengthened. $i_{min} \ge 3$ is preferable, $i_{min} \ge 5$ is preferable, and $i_{min} \ge 1/2 \times L/10$ is still more preferable. In $i_{min} \ge 1/2 \times L/10$, a decimal point or less of $1/2 \times L/10$ is truncated.

In Fig. 3, the average diameter of the spherical structures is reduced from the first surface toward the second surface and satisfies the condition (2) of $-0.30 \le Da_5 - Db_2 \le 0.30$ at $i_{min} = 5$. At this time, $Da_1/Da_5 = 1.29$, and the condition (1) is also satisfied. In the example of Fig. 3, since a membrane thickness (the thickness L of the spherical structure layer) is 240 $\mu m$, $3 \le i_{min} \le (L - 20)/10$ is satisfied.

The thickness L of the spherical structure layer (the hollow fiber membrane) is preferably 60 $\mu m$ or more and 500 $\mu m$ or less in consideration of the water permeability and the strength elongation, more preferably 100 $\mu m$ or more and 500 $\mu m$ or less from the viewpoint of the closing position dispersion in the thickness direction by depth filtration, and still more preferably 150 $\mu m$ or more and 350 $\mu m$ or less from the viewpoint of a membrane area.

The value $i_{min}$ is preferably $i_{min} \le L \times 0.75/10$. That is, it is preferable that (1) and (2) are satisfied in a range from the first surface to 3/4 of the thickness of the entire membrane. In $i_{min} \le L \times 0.75/10$, a decimal point or less of $L \times 0.75/10$ is truncated.

Under this condition, the following condition (4) is preferably satisfied for all natural numbers m larger than the numerical value $i_{min}$ and equal to or less than (L - 20)/10.

$$(4)\ {-}0.30 \le Da_m - Db_2 \le 0.30$$

Regions satisfying (4) above have average diameters close to each other, and the structure is homogeneous in the range of $i_{min} < m \le (L - 20)/10$. From the definition of the m range, the region occupied by the homogeneous structure in the membrane thickness is 1/4 or more, and sufficient separability is obtained. In addition, when the membrane surface is damaged during membrane formation or during operation, the thickness of a homogeneous structure layer falls within this range, so that deterioration of the separability and a blocking property can be prevented. The uniform structure layer is preferably 10 $\mu m$ or more. The uniform structure layer is more preferably 20 $\mu m$ or more and still more preferably 30 $\mu m$ or more.

It is preferable that $1.10 < Da_1/Da_{imin} < 4.00$ is satisfied. When $Da_1/Da_{imin}$ is greater than 1.10, the dispersion of the clogging component in the thickness direction is promoted. When $Da_1/Da_n$ is smaller than 4.00, high strength can be maintained. The relation of $Da_1/Da_i$ is more preferably $1.15 < Da_1/Da_{imin} < 3.50$ and still more preferably $1.20 < Da_1/Da_{imin} < 3.00$.

In addition, $0.50\ \mu m < Db_2 < 2.00\ \mu m$ is preferably satisfied. When the average diameter $Db_2$ of the spherical structure in the vicinity of the second surface is larger than 0.50 $\mu m$, a hollow fiber membrane having high water permeability is obtained. In addition, when Dbz is smaller than 2.00 $\mu m$, it is possible to impart a blocking property suitable for sterilization or the like.

It is preferable that $1.00 \le Da_1/Da_2 \le 1.10$ is satisfied. When $Da_1/Da_2$ is 1.00 or more, the average diameter of the spherical structures is reduced from the first surface, and thus a more preferable structure can be obtained in the present invention. When Dai/Daz is 1.10 or less, the average diameter of the spherical structures is gradually reduced from the first surface, and thus $i_{min}$ can be increased, and improvement in the filterability is expected.

It is preferable that the first surface is the outer surface of the hollow fiber membrane (the outer surface of the hollow fiber membrane is the first surface). Since the first surface is on the outer surface of the hollow fiber membrane, the membrane area can be increased.

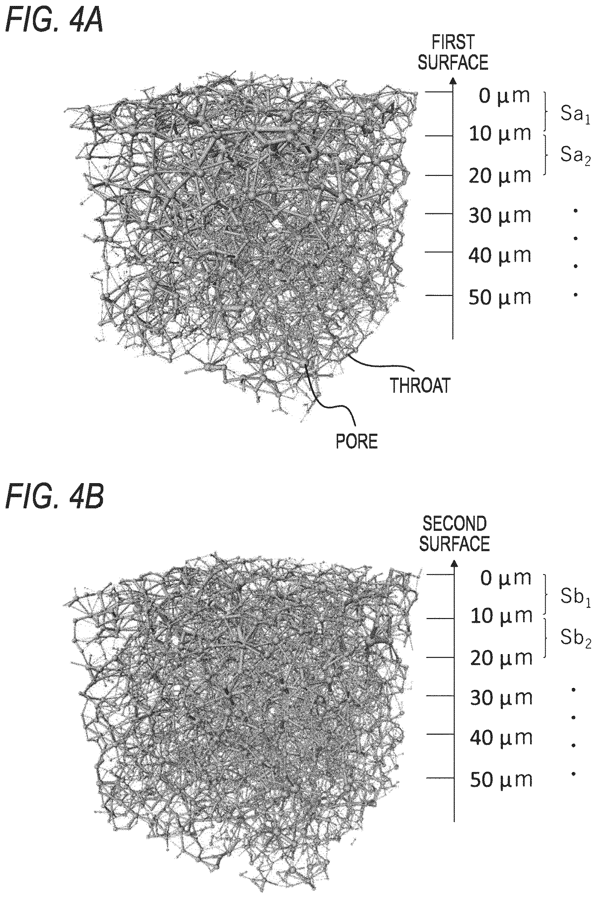

Next, a constriction diameter of a spherical structure gap with respect to the position in the thickness direction of the hollow fiber membrane will be described with reference to Fig. 4A and Fig. 4B.

Fig. 4A and Fig. 4B are pore network model analysis images of the hollow fiber membrane. Fig. 4A is the vicinity of the first surface, Fig. 4B is the vicinity of the second surface, and an upper side of both images is a membrane surface.

The pore network model is a model in which void portions of a porous body are mechanically divided at a constriction portion, a sphere (hereinafter, may be referred to as a pore) corresponding to a divided region volume and a pipe (hereinafter, may be referred to as a throat) corresponding to an area of a divided surface are prepared, and the void portions of the porous body is expressed as a network structure of the pore and the throat.

A three-dimensional image obtained by superimposing the electron microscopic photographs may be used for the pore network model analysis, a size of an analysis region is not particularly limited, but when an average diameter of the spherical structure is 1 to 3 $\mu$m, the three-dimensional image obtained by superimposing 50 $\mu$m square photographs is preferable because the number of constriction portions of the spherical structure gap sufficient for analysis can be obtained.

In general, water permeability of the porous body is quantitatively analyzed by performing a Hagen-Poiseuille flow analysis of water flow in the throat. Here, when a porosity in the analysis region is equal, the larger an average value of the throat diameters, that is, an average constriction diameter, the higher the water permeability.

An average constriction diameter $da_1$ of the spherical structure gap in the region $Sa_1$ and an average constriction diameter $db_2$ in the region $Sb_2$ preferably satisfy a relation of $da_1 > dbz$. That is, when the throat diameter obtained by the pore network model analysis for the hollow fiber membrane is defined as the constriction diameter of the spherical structure gap, it is preferable that the average diameter $da_n$ of the constriction diameter of the spherical structure gap in the region $Sa_n$ of $10 \times (n-1)$ to $10 \times n$ $\mu$m from the first surface and the average diameter $db_n$ of the constriction diameter of the spherical structure gap in the region $Sb_n$ of $10 \times (n-1)$ to $10 \times n$ $\mu$m from the second surface satisfy $da_1 > db_2$. The average constriction diameter $da_1$ of the region $Sa_1$ in the vicinity of the first surface is larger than the average constriction diameter $db_2$ of the region $Sb_2$ in the vicinity of the second surface, so that the liquid permeation resistance in the vicinity of the first surface is reduced, and thus the water permeability is improved.

The inventors further found that a minimum value $j_{min}$ of a natural number j satisfying the following conditions (1) and (2) satisfies $3 \leq j_{min} \leq (L-20)/10$, whereby the water permeability and the separability are maintained for a long time. In $3 \leq j_{min} \leq (L-20)/10$, the decimal point or less of $(L-20)/10$ is truncated.

$$(1)\ da_1/da_j \geq 1.15$$

$$(2)\ da_j - db_2 \leq 0.10\ \mu m$$

The fact that the value $j_{min}$ is within the above range means that the region $Sa_j$ having an average constriction diameter smaller than the average constriction diameter $da_1$ in the region closest to the first surface and equal to the average constriction diameter $db_2$ of the region $Sb_2$ is located closer to the second surface than $Sa_2$. Accordingly, the clogging component can be more widely dispersed in the thickness direction of the membrane. As a result, the operation period can be lengthened. $J_{min} \geq 3$ is preferable, and $j_{min} \geq 5$ is more preferable. Further, $j_{min} \leq L \times 0.5/10$ is still more preferable. In $j_{min} \leq L \times 0.5/10$, a decimal point or less of $L \times 0.5/10$ is truncated.

In addition, it is preferable that $Na_1 < Nb_2$ is satisfied for the number of throats $Na_n$ in the region $Sa_n$ and the number of throats $Nb_n$ in the region $Sb_n$, which are prepared by the analysis. That is, it is preferable that $Na_1 < Nb_2$ is satisfied for the number of throats $Na_n$ in the region $Sa_n$ and the number of throats $Nb_n$ in the region $Sb_n$, which are obtained by the pore network model analysis. When the number of throats is large in the vicinity of the second surface, the number of branches of a transmission channel is increased, and a circumvention performance when the clogging occurs is improved.

The number of throats $Na_n$ in the region $Sa_n$ indicates the number of throats in which a centroid point of the throat is in the region $Sa_n$, and all (the entire) of the throats may not be accommodated in the region $Sa_n$.

The inventors further found that a minimum value $k_{min}$ of a natural number k satisfying the following conditions (3) and (4) satisfies $3 \leq k_{min} \leq (L-20)/10$, whereby the water permeability and the separability are maintained for a long time. In $3 \leq k_{min} \leq (L-20)/10$, the decimal point or less of $(L-20)/10$ is truncated.

$$(3)\ Na_1/Na_k \geq 0.90$$

$$(4)\ Nb_2 - Na_k \leq 400$$

An analysis region in the analysis is a cuboid including any 50 $\mu$m square of the first surface and any 50 $\mu$m square of the second surface facing the first surface, and $Sa_n$ and $Sb_n$ are regions of 50 $\mu$m $\times$ 50 $\mu$m $\times$ 10 $\mu$m.

The fact that the value $k_{min}$ is within the above range means that a region $Sa_k$ having the number of throats greater than the number of throats $Na_1$ in the region closest to the first surface and equal to the number of throats $Nb_2$ of the region $Sb_2$ is located closer to the second surface than $Sa_2$. Accordingly, the clogging component can be more widely dispersed in the thickness direction of the membrane. As a result, the operation period can be lengthened. $K_{min} \geq 3$ is preferable, and $k_{min} \geq 5$ is more preferable. Further, $k_{min} \leq L \times 0.5/10$ is still more preferable. In $k_{min} \leq L \times 0.5/10$, the decimal point or less of $L \times 0.5/10$ is truncated.

It is preferable that $0.10\ \mu m < db_2 < 10.0\ \mu m$ is satisfied. Alternatively, it is preferable that $0.1\ \mu m < db_2 < 10$

$\mu$m is satisfied. When the average constriction diameter $db_2$ of the spherical structure gap in the vicinity of the second surface is larger than 0.10 $\mu$m, a hollow fiber membrane having high water permeability is obtained. In addition, when $db_2$ is smaller than 10.0 $\mu$m, it is possible to impart the blocking property suitable for sterilization or the like.

Next, in the hollow fiber membrane according to the embodiment of the present invention, it is also preferable that a hydrophilic polymer exists on the surface and inside of the spherical structure. Accordingly, it is possible to achieve excellent stain resistance while maintaining water permeability.

Examples of the hydrophilic polymer include polymers containing vinyl alcohol, ethylene glycol, vinylpyrrolidone, methacrylic acid, allyl alcohol, cellulose, and vinyl acetate. Furthermore, examples of a copolymer containing a hydrophilic group include a polyvinyl alcohol having a saponification degree of less than 99%, a vinylpyrrolidone/vinyl acetate copolymer, a vinylpyrrolidone/vinyl caprolactam copolymer, and a vinylpyrrolidone/vinyl alcohol copolymer, and at least one of these copolymers is preferably included.

The content of the hydrophilic polymer is preferably 1.0 part by mass or more with respect to 100 parts by mass of a hydrophobic polymer. The hydrophilic polymer is more preferably 1.0 part by mass or more and 6.0 parts by mass or less, still more preferably 1.0 part by mass or more and 4.0 parts by mass or less with respect to 100 parts by mass of the hydrophobic polymer.

When the content of the hydrophilic polymer is greater than 6.0 parts by mass, a flow channel is narrowed by the hydrophilic polymer, and liquid permeability may decrease. For example, when the spherical structure is made of the polyvinylidene fluoride-based resin, the content of the hydrophilic polymer is preferably within the above range with respect to 100 parts by mass of the polyvinylidene fluoride-based resin.

In the hollow fiber membrane according to the embodiment of the present embodiment, a percentage of a ratio P1/P0 of P1 to P0 is preferably 70% or less, where P1 is a ratio (mass%) of the hydrophilic polymer to the polyvinylidene fluoride-based resin after the hollow fiber membrane is immersed in a 3,000 ppm of aqueous sodium hypochlorite solution (pH 12.5) at 60°C for 30 hours, and P0 is a ratio (mass%) of the hydrophilic polymer to the polyvinylidene fluoride-based resin before the immersion. The hydrophilic polymer existing on the surface of the spherical structure is removed from the hollow fiber membrane by being immersed in the aqueous sodium hypochlorite solution, but a hydrophilic polymer existing inside remains. Thus, P1/P0 represents a mass ratio of the hydrophilic polymer inside the spherical structure to a total mass of the hydrophilic polymer.

The content of the hydrophilic polymer of the hollow fiber membrane can be quantified by X-ray photoelectron spectroscopy (XPS), total reflection infrared spectroscopy (ATR-IR), proton nuclear magnetic resonance spectroscopy (1H-NMR), or the like. Hereinafter, a case where the hollow fiber membrane using $^1$H-NMR includes a fluororesin-based hydrophobic polymer will be described as an example. As a method of quantifying an introduction amount of the hydrophilic polymer by $^1$H-NMR, a 2 cm hollow fiber membrane is dissolved in 1 mL of dimethyl sulfoxide and measured by $^1$H-NMR. For example, when the spherical structure is made of the polyvinylidene fluoride-based resin, the measurement is performed at any two points of the hollow fiber membrane, and an amount of the hydrophilic polymer is obtained when the detected ratio of the PVDF -based resin is 100.

<Method for Manufacturing Hollow Fiber Membrane>

A method for manufacturing the hollow fiber membrane according to the embodiment of the present invention includes, for example, the following steps (a) to (d) when the spherical structure is made of the polyvinylidene fluoride-based resin.

(a) A step of dissolving a polyvinylidene fluoride-based resin in a poor solvent to obtain a polyvinylidene fluoride-based resin solution.

(b) A step of maintaining the polyvinylidene fluoride-based resin solution under a condition at which primary nucleus formation progresses.

(c) A step of discharging the polyvinylidene fluoride-based resin solution in a hollow fiber shape through a pipe and a spinneret, and applying a temperature gradient to the polyvinylidene fluoride-based resin solution in a thickness direction thereof in at least one of the pipe or the spinneret, after step (b).

(d) A step of immersing the polyvinylidene fluoride-based resin solution in a cooling bath, thereby solidifying the polyvinylidene fluoride-based resin solution by solid-liquid type thermally induced phase separation, after step (c).

In addition, it is preferable that a temperature gradient $\Delta T$ (°C) applied in step (c) and a time t (sec) for applying the temperature gradient satisfy $50 \leq \Delta T \times t \leq 300$.

In step (a), a poor solvent is used to induce the solid-liquid type thermally induced phase separation in the subsequent step (d). Examples of the solvent that induces the solid-liquid type thermally induced phase separation include, in particular, alkyl ketones having a medium chain length such as cyclohexanone, isophorone, $\gamma$-butyrolactone, methyl isoamyl ketone, dimethyl sulfoxide, and propylene carbonate, esters, organic carbonates, and mixed solvents thereof.

The higher a resin concentration in the resin solution, the more easily the primary nucleus is formed, and thus the average diameter of the spherical structure becomes small, and as a result, a separation membrane having high strength elongation is obtained. However, when the resin concentration in the resin solution is low, the porosity of the manufactured separation membrane is increased, and high water permeability is obtained. From these viewpoints, in order to achieve both water permeability and high strength elongation, the resin concentration in the resin solution is preferably 30% by weight or more and 60% by weight or less.

A temperature T1 °C at the time of dissolution in step (a) is preferably equal to or higher than a crystallization temperature Tc°C. The crystallization temperature Tc can be measured using a differential scanning calorimetry (DSC measurement) device. The crystallization temperature Tc is a rising temperature of a crystallization peak observed in a process in which a mixture having the same composition as the resin solution used for membrane manufacturing is sealed in a sealed DSC container, heated to a dissolution temperature at a heating rate of 10°C/ min, held for 30 minutes, and uniformly dissolved, and then cooled at a cooling rate of 10°C/ min.

Specifically, the temperature T1°C is more preferably (Tc + 20)°C or higher and still more preferably (Tc + 30)°C or higher. The temperature T1°C is preferably (Tc + 100)°C or lower and more preferably (Tc + 90)°C or lower. More specifically, the temperature T1°C is preferably 100°C or higher and more preferably 110°C or higher. The temperature T1°C is preferably 200°C or lower and more preferably 190°C or lower.

In order to form a spherical structure homogeneously by the solid-liquid type thermally induced phase separation, the polyvinylidene fluoride-based resin solution is preferably dissolved uniformly, and thus a dissolution time is preferably 2 hours or more and more preferably 4 hours or more.

The resin solution may contain other additives.

Step (b) is a step of maintaining the polyvinylidene fluoride-based resin solution under a condition at which the primary nucleus formation progresses. The formation process of the spherical structure is considered to be a crystal generation process from results of X-ray diffraction and the like. In general, a crystal firstly generated when a crystalline high molecule such as the polyvinylidene fluoride-based resin is crystallized is referred to as the primary nucleus. The primary nucleus grows to form one spherical structure.

Since the growth of the spherical structure continues until the spherical structures collide with each other and the growth stops due to the collision, the final grain size of the spherical structure depends on the number of primary nuclei generated first. That is, it is considered that in order to obtain a small microspherical structure, it is preferable to form a large number of primary nuclei, and in order to obtain a large giant spherical structure, it is preferable to form a small number of primary nuclei. That is, in control of the spherical structure, it is effective to control the progress of the formation of the primary nucleus.

The progress of the formation of the primary nucleus of the resin solution can be controlled by temperature, pressure, and/or time. Specifically, a primary nucleus formation temperature T2 is preferably equal to or higher than a temperature of the cooling bath of step (d), more preferably equal to or higher than the crystallization temperature Tc°C, and still more preferably equal to or higher than (Tc + 20)°C. In addition, the primary nucleus formation temperature T2 is preferably equal to or lower than the temperature T1°C at the time of dissolving the resin, and more preferably equal to or lower than (Tc + 55)°C.

As for the pressure, the resin solution is preferably pressurized to 0.5 MPa or more, and more preferably pressurized to 0.8 MPa or more. By allowing the resin solution to stand under this pressure, the primary nucleus formation at the temperature stably progresses. An upper limit of the pressure is preferably 3.0 MPa.

A time maintained at the condition that the primary nucleus formation progresses is preferably 10 seconds or more, and more preferably 20 seconds or more. The formation of the primary nucleus of the crystal in the thermally induced phase separation gradually progresses in a region from the melting temperature or lower to the crystallization temperature Tc or higher (in the present description, referred to as a "metastable region"), but the number of primary nuclei formed can be controlled relatively stably by setting the resin solution under the above conditions.

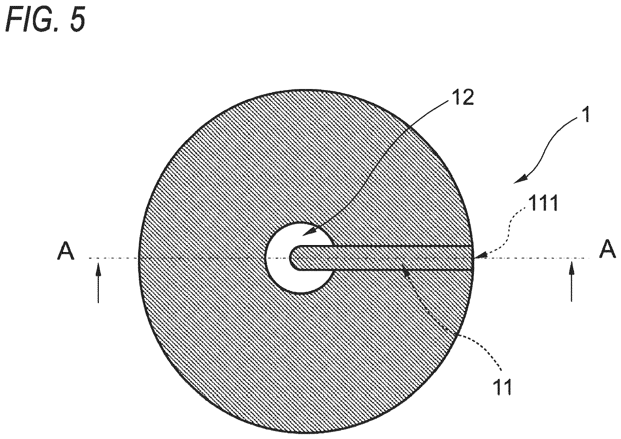

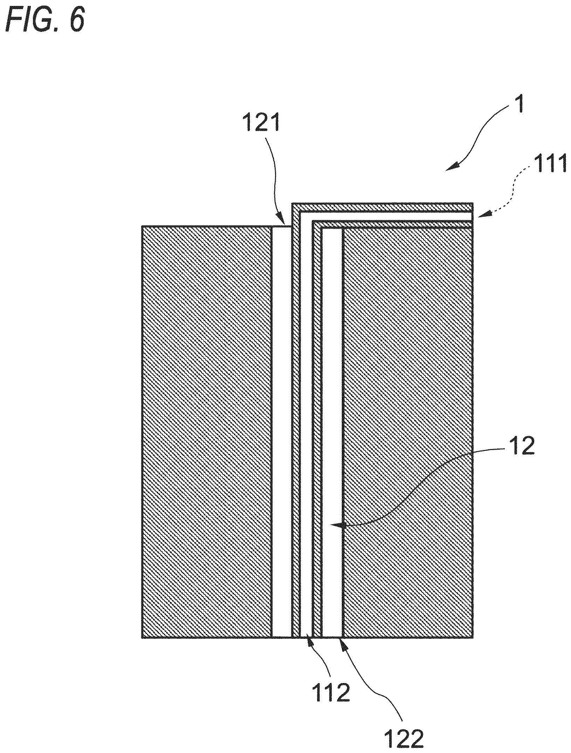

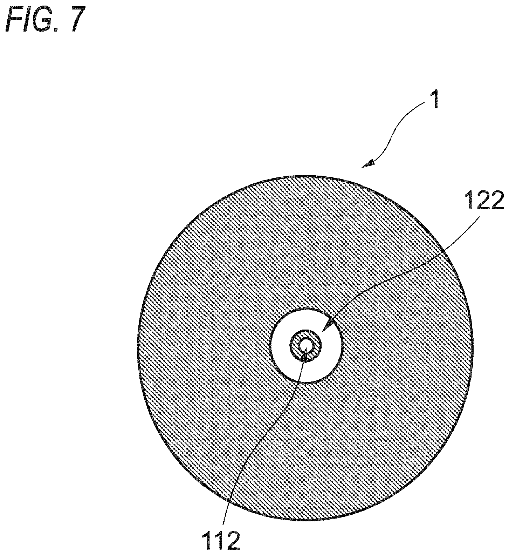

Specifically, step (c) is to discharge the resin solution having undergone step (b) into the hollow fiber shape in a forming spinneret having a tubular shape. At this time, the solution may be sent to the forming spinneret through a pipe provided after step (b) and before step (c). Fig. 5 shows an example of a shape of the forming spinneret. As shown in Fig. 5, a spinneret 1 for manufacturing the hollow fiber membrane includes an inner nozzle 11 and an annular nozzle 12 provided outside the inner nozzle 11 to surround the inner nozzle. As shown in Figs. 6 and 7, the inner nozzle 11 includes an inner nozzle inlet 111 and an inner nozzle outlet 112, and the annular nozzle 12 includes an annular nozzle inlet 121 and an annular nozzle outlet 122. The resin solution is discharged from the annular nozzle of an outer pipe, and at the same time, a fluid that forms a hollow portion is discharged from a nozzle of an inner pipe, whereby the resin solution is formed (processed) into a hollow shape.

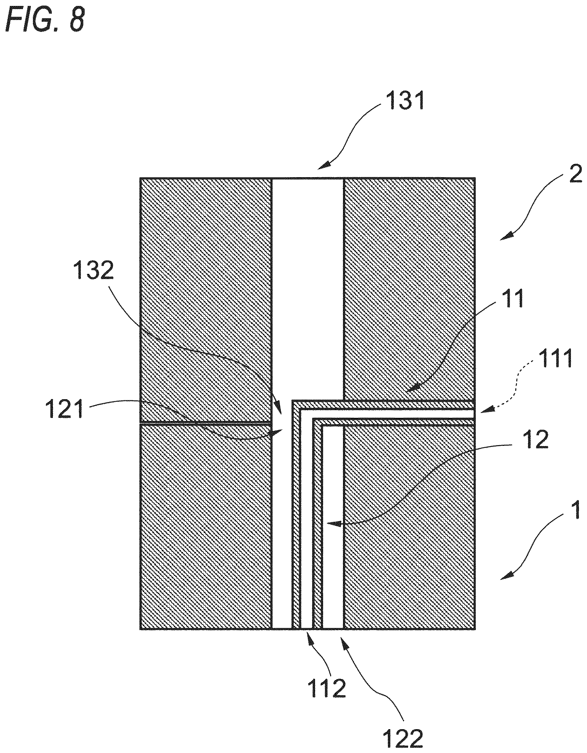

An example of a shape of the pipe is shown in Fig. 8. The pipe 2 is connected to the spinneret 1, and specifically, a pipe outlet 132 and the annular nozzle inlet 121 are connected to each other. The resin solution is introduced from the pipe inlet 131, and the resin solution led out from the pipe outlet 132 is introduced from the annular nozzle inlet 121 into the annular nozzle 12.

Further, step (c) includes a step of applying the temperature gradient to the polyvinylidene fluoride-based resin solution in the thickness direction thereof in at least one of the pipe or the spinneret. The expression "applying the temperature gradient in the thickness direction thereof" means that, in the resin solution flowing through the pipe or in the resin solution formed in the shape of the hollow fiber in the spinneret, a part of temperature in the thickness direction is different from the temperature of the other part. For example, it means that in the resin solution formed in the hollow fiber shape, the temperature is relatively increased from one surface to the other surface.

Examples of a specific method of applying the temperature gradient in the thickness direction include, for example, performing at least one of the following (1) to (3).

(1) A temperature of the spinneret 1 is set higher or lower than a temperature of a supplied resin solution.
(2) A temperature of an injection liquid passing through the inner nozzle 11 of the spinneret 1 is set higher or lower than the temperature of the supplied resin solution.
(3) A temperature of the pipe at a preceding stage for sending solution to the spinneret 1 is set higher or lower than the temperature of the supplied resin solution.

By performing at least one of the above (1) to (3), the spherical structure near either the outer surface or the inner surface of the hollow fiber membrane can be set larger than the spherical structure near the other surface. The temperature of the spinneret 1, the temperature of the injection liquid, and the temperature of the pipe in the above (1) to (3) are indicated as T3 (°C), respectively.

In the method of relatively increasing the temperature, it is also possible to decrease the resin temperature of a portion other than a portion to be formed into a spherical structure having a large average diameter, but in this case, the effect of reducing the spherical structure on a side where the resin temperature is decreased is smaller than the effect of increasing the spherical structure by increasing the resin temperature. This is because the formation of the primary nucleus gradually progresses in the metastable region as described above.

For example, when the temperature gradient is applied to the resin solution in a relatively short time by cooling at a specific temperature, the condition is insufficient for the progress of primary nucleus formation. On the other hand, the primary nuclei after formation are relatively greatly affected by the temperature rise of the resin solution and decrease, resulting in a decrease in the number of spherical structures after solidification. That is, the primary nucleus of the resin solution has a different change behavior with respect to the temperature change of rising and decreasing.

Therefore, when the spherical structure diameter is changed by "applying the temperature gradient", a step of partially heating the resin solution is preferably used.

Units (temperature control unit) for controlling the temperatures in the above (1) to (3) are not limited to a specific device or method. Examples of temperature control units are shown below.

In the above (1), the spinneret may be warmed by a heater disposed around the spinneret, or the spinneret may be warmed by a spinneret temperature regulator and then used.

In the above (2), the injection liquid may be warmed by a heater or the like before reaching the spinneret 1. The injection liquid may flow through the pipe connected to the spinneret 1 after warming, or the pipe per se may be warmed by a heater.

In the above (3), the pipe may be warmed by a heater or a spinneret temperature regulator. Regarding a shape of the pipe, a pipe having a circular pipe shape is preferable from the viewpoint of providing the temperature gradient in the thickness direction of the hollow fiber membrane.

Further, the "temperature" T3 in the above (1) to (3) is a set temperature of each temperature control unit (for example, a heater or a spinneret temperature regulator).

From the viewpoint of "applying the temperature gradient in the thickness direction", the method of increasing the temperature of the spinneret 1 of the above (1) and the method of increasing the temperature of the injection liquid of the above (2) are preferable for preventing unevenness in the temperature gradient in a circumferential direction of the hollow fiber membrane. In the method of increasing the temperature of the pipe at the preceding stage for sending solution to the spinneret 1 of the above (3), it is necessary to design the pipe and the spinneret such that the resin solution heated in the vicinity of a wall surface of the pipe in the pipe is passed through the vicinity of the wall surface in the spinneret 1 in the same manner, but it is not necessary to heat the injection liquid as compared with the case of heating the spinneret 1. As will be described later, since there is a possibility that the injection liquid boils depending on a heating condition and bubbles may be mixed, the method of (3) in which only the resin solution is heated is also suitable. In this case, the temperature of the spinneret 1 at a subsequent stage is preferably controlled to temperature T2 to T3 in order to prevent cooling.

In addition, when the pipe is heated, it is preferable to heat a pipe laid in the vertical direction. In a pipe laid in the horizontal direction, a weight of the resin solution promotes mixing of the resin solution inside the pipe, and thus it is difficult to maintain the temperature gradient applied in the thickness direction, but the mixing of the resin solution in the thickness direction can be prevented in the pipe laid in the vertical direction.

When the temperature gradient $\Delta T$ (°C) and the time t (sec) for applying the temperature gradient are set to $50 \le \Delta T \times t \le 300$ in the step of applying the temperature gradient, the minimum value $i_{min}$ of the natural number i satisfying the following conditions (1) and (2) can be set to $3 \le i_{min} \le (L - 20)/10$.

$$(1)\ Da_1/Da_i \ge 1.1$$

$$(2)\ -0.3\ \mu m \le Da_i - Db_2 \le 0.3\ \mu m.$$

Here, the temperature gradient $\Delta T$ is an absolute value of T3 - T2, and the time t is a time (referred to as residence time) during which the resin solution flows through the pipe or the spinneret to which the temperature gradient is applied. When $\Delta T \times t \ge 50$, a heat gradient can be applied to a deep portion in the thickness direction of the resin solution, and a gradient can be generated from the surface of the membrane to the deep portion in the thickness direction even in the diameter of the spherical structure. If $\Delta T \times t$ is too large, the uniformity of heat in the thickness direction of the resin solution is increased, and the diameter of the spherical structure in the obtained membrane is also uniform in the thickness direction. On the other hand, when $\Delta T \times t \le 300$ is satisfied, the gradient of the spherical structure as described above can be formed. Accordingly, $50 \le \Delta T \times t \le 300$ is preferable, and $60 \le \Delta T \times t \le 250$ is still more preferable.

The time t for which the temperature gradient is applied is preferably from 0.1 seconds to 20 seconds, and more preferably from 5 seconds to 10 seconds.

The time t for which the temperature gradient is applied (heating time when the resin solution is raised in temperature) is a time taken for the resin solution to pass through the spinneret when the temperature gradient is applied to the resin solution by heating the spinneret 1 for the hollow fiber membrane shown in Figs. 5 to 7. When the temperature gradient is applied to the resin solution by heating an upstream pipe of the spinneret 1, the time t is a time taken to pass through the pipe. For example, as shown in Fig. 8, when the resin solution is supplied from the pipe 2 to the spinneret 1 and an outer peripheral portion of the pipe 2 is heated, a time for which the resin passes from the pipe inlet 131 to the pipe outlet 132 is the time t.

Further, in step (c), it is preferable that the thickness Ls of the polyvinylidene fluoride-based resin to which the temperature gradient is applied is 5 < Ls/L < 40 with respect to the thickness L of the spherical structure layer. The thickness Ls of the polyvinylidene fluoride-based resin to which the temperature gradient is applied is a flow channel thickness of the pipe to which the temperature gradient is applied. For example, when the temperature gradient is applied to the spinneret 1 as shown in Fig. 6, the thickness of the polyvinylidene fluoride-based resin passes through the annular nozzle 12, and thus the thickness Ls of the polyvinylidene fluoride-based resin is a thickness of the annular nozzle 12. That is, the thickness Ls is a value obtained by subtracting an inner diameter from an outer diameter of the annular nozzle 12 and dividing the result by 2.

In addition, in a case where the temperature gradient is applied to the pipe at the preceding stage for sending solution to the spinneret 1, if the pipe through which the polyvinylidene fluoride-based resin passes is a circular pipe, a radius thereof is the thickness Ls of the polyvinylidene fluoride-based resin. When the pipe has a shape other than the circular pipe, a circular pipe equivalent radius of the pipe is the thickness Ls of the polyvinylidene fluoride-based resin. The circular pipe equivalent radius is a value obtained by $2 \times A/P$ from a cross-sectional area A of the pipe and a wet edge length P of the pipe. The wet edge length P is a circumferential length of the portion of the pipe cross section that contacts the liquid.

A pipe position for calculating the thickness Ls is a position closest to a heat source. When the heat source is a heat medium that flows through a mold or a heat source that heats at a point such as a rod heater, in the pipe through which the polyvinylidene fluoride-based resin passes, the thickness Ls is the thickness of the flow channel closet to the heat source. When the heat source heats the surface of the pipe such as a band heater or a double pipe, the thickness Ls is a thickness of the flow channel at a center position of a range covered by the heat source in the length direction of the pipe through which the polyvinylidene fluoride-based resin passes.

When the thickness Ls satisfies Ls/L > 5, heat transfer over the entire thickness of the spherical structure layer can be prevented, and a structure in which the spherical structure on a first surface side is coarse and the spherical structure on a second surface side is dense, like the hollow fiber membrane according to the embodiment of the present invention can be obtained. When the thickness Ls satisfies Ls/L < 40, it is possible to prevent that only the spherical structure of the region Sa1 on the first surface side becomes coarse and to obtain a structure in which a size of the spherical structure is attenuated to the second surface side. It is preferable that 10 < Ls/L < 40, and it is more preferable that 15 < Ls/L < 35.

The polyvinylidene fluoride-based resin solution discharged into the hollow fiber shape passes through the air and then is immersed in the cooling bath. At this time, it is preferable that the polyvinylidene fluoride-based resin solution passes through the air for 0.3 seconds or more. The time for passing through the air is a time until the polyvinylidene fluoride-based resin solution discharged from the spinneret lands on the cooling bath in step (c), and is hereinafter referred to as "air running time" for convenience.

When the air running time is 0.3 seconds or more, it is possible to ensure a time for transferring the heat applied in step (c) to an inner surface side, which is preferable. The air running time is preferably 1 second or more and more preferably 1.5 seconds or more. In addition, when the air running time is long, cooling from the outer surface proceeds, and thus the air running time is preferably 5 seconds or less and more preferably 3 seconds or less.

The air running time can be calculated from the following formula.

$$\text{Air running time (sec)} = \text{air running distance (m)/tracking speed in cooling bath (m/sec)}$$

Here, the air running distance is a length of a straight line drawn vertically downward from the lowermost portion of the spinneret to an upper surface of the cooling bath. The tracking speed in the cooling bath can be calculated from the following formula from a rotation speed (rpm) and a roll diameter (m) of a cooling bath roll. $\pi$ is the circumferential rate. For example, when a roll having a diameter of 0.2 m is rotating at a speed of 10 rpm, the tracking speed is about 0.1m/sec.

$$\text{tracking speed (m/second)} = \text{rotation speed of roll (rpm)/60} \times \pi \times \text{roll diameter (m)}$$

Further, the temperature, humidity, solvent vapor concentration, and the like may be adjusted when passing through the air.

In step (d), after step (c), the polyvinylidene fluoride-based resin solution is immersed in the cooling bath to solidify the polyvinylidene fluoride-based resin solution by the solid-liquid type thermally induced phase separation.

The thermally induced phase separation is a method in which a resin solution dissolved in a poor solvent or a good solvent at a temperature equal to or higher than the crystallization temperature Tc is solidified by cooling. Examples of the thermally induced phase separation include the following (A) and (B).

(A) A liquid-liquid type in which a resin solution uniformly dissolved at a high temperature is separated into a dense phase and a dilute phase of a resin due to a decrease in dissolution capacity of the solution during cooling.

(B) A solid-liquid type in which the resin solution uniformly dissolved at a high temperature becomes equal to or lower than the crystallization temperature Tc at the time of cooling to cause crystallization and phase-separated into a polymer solid phase and a polymer dilute solution phase.

In the liquid-liquid type, a fine three-dimensional network structure is formed by a dense phase, and a spherical structure is formed in the solid-liquid type. Therefore, for the manufacturing of the separation membrane according to the embodiment of the present invention, the solid-liquid type is preferably used.

The cooling bath is preferably a mixed liquid containing a poor solvent or good solvent having a concentration of 50% by weight or more and 95% by weight or less and a non-solvent having a concentration of 5% by weight or more and 50% by weight or less. When the concentration of the non-solvent is 50% by weight or less, solidification due to the thermally induced phase separation can be more preferentially progressed than solidification by non-solvent induced phase separation. Note that the lower the concentration of the good solvent, the higher a solidification rate, but by lowering the temperature of the cooling bath, even when the concentration of the good solvent is high the solidification can be promoted and the surface of the separation membrane can be smoothed.

The poor solvent is preferably the same poor solvent as the resin solution.

Specific examples of the good solvent include lower alkyl ketones such as N-methyl-2-pyrrolidone, dimethyl sulfoxide, dimethyl acetamide, dimethyl formamide, methyl ethyl ketone, acetone, tetrahydrofuran, tetramethylurea, and trimethyl phosphate, esters, amides, and mixed solvent thereof, but the good solvent is not limited thereto.

Examples of the non-solvent include water, and aliphatic hydrocarbons, aromatic hydrocarbons, aliphatic polyhydric alcohols, aromatic polyhydric alcohols, chlorinated hydrocarbons, or other chlorinated organic liquids such as hexane, pentane, benzene, toluene, methanol, ethanol, carbon tetrachloride, o-dichlorobenzene, trichloroethylene, ethylene glycol, diethylene glycol, triethylene glycol, propylene glycol, butylene glycol, pentanediol, hexanediol, and low molecular weight polyethylene glycol, and a mixed solvent thereof.

In the present description, the "good solvent" means a solvent capable of dissolving 5% by weight or more of a solute even at a low temperature of lower than 60°C. The "poor solvent" means a solvent not capable of dissolving 5% by weight or more of a solute at a low temperature of lower than 60°C but capable of dissolving 5% by weight or more of the solute in a high-temperature region of 60°C or more and a melting point or less of the polyvinylidene fluoride-based resin. The "non-solvent" means a solvent that does not dissolve or swell a solute up to a melting point of the solute or a boiling point of the solvent.

By setting a temperature T4 of the cooling bath lower than the crystallization temperature Tc of the polyvinylidene fluoride-based resin, solid-liquid type phase separation is induced. Hereinafter, a relation between the cooling bath temperature T4, the crystallization temperature Tc, and the primary nucleus formation temperature T2 will be described.

In the solid-liquid type thermally induced phase separation, crystallization (hereinafter also referred to as nucleation) caused by cooling and growth of crystal nuclei formed occurs, resulting in phase separation into the polymer solid phase and the polymer dilute solution phase. In the solid-liquid type phase separation, it is considered that growth starting from primary nuclei formed in step (b) and random nucleation which does not start from the primary nuclei occur. In the growth starting from the primary nuclei, the number of spherical structures to be generated correlates with the number of primary nuclei. Since the growth of the spherical structure proceeds until coming into contact with the surrounding spherical structure, when the number of the primary nuclei is small, the growth is promoted and a coarse spherical structure is generated, and when the number of the primary nuclei is small, a dense spherical structure is generated.

The growth starting from the primary nuclei and the random nucleation and growth which does not start from the primary nuclei depend on the cooling rate of the resin solution. That is, these growths depend on a difference between the primary nucleus formation temperature T2 and the cooling bath temperature T4. The smaller the difference, the easier the former crystallization proceeds, and the larger the difference, the easier the latter crystallization proceeds. That is, when the temperature gradient is applied in the thickness direction of the hollow fiber membrane in step (c) and the resin solution in a state in which the number of primary nuclei changes in the thickness direction is rapidly cooled, the random nucleation occurs regardless of the number of primary nuclei, and thus a structure in which the average diameter of the spherical structure changes in the thickness direction of the hollow membrane is hardly generated. On the other hand, when the resin in a state in which the number of primary nuclei changes in the thickness direction is slowly cooled, a hollow fiber membrane in which the average diameter of the spherical structure changes in the thickness direction can be obtained by promoting the growth starting from the primary nuclei.

The crystallization temperature Tc is also affected by the cooling rate of the resin solution. The higher the cooling rate, the higher the crystallization temperature, and the faster the phase separation proceeds. The cooling rate depends on the difference between the primary nucleus formation temperature T2 and the cooling bath temperature T4.

In the method for manufacturing a hollow fiber membrane according to the embodiment of the present invention, as a result of trial and error in view of the above characteristics, it has been found that the average diameter of the spherical structure is changed in the thickness direction of the hollow membrane by being manufactured under the following temperature condition.

$$(Tc - T4)/(T2 - T4) < 0.50$$

T2 - T4 is a parameter that becomes the total cooling rate, and Tc - T4 is a parameter that contributes to the growth. The inventors have found that, by reducing the temperature difference contributing to the growth among the total cooling rates, the growth starting from the primary nuclei proceeds. It is more preferable that $(Tc - T4)/(T2 - T4) < 0.45$, and it is still more preferable that $(Tc - T4)/(T2 - T4) < 0.40$. In the method for manufacturing a hollow fiber membrane according to the embodiment of the present invention, a relation of $15 < Tc - T4 < 35$ is preferably satisfied. When Tc - T4 is higher than 15°C, it is possible to prevent a solidification time from becoming too long, and it is possible to prevent a manufacturing facility from becoming excessively large. Further, the inventors have found that, when Tc - T4 is lower than 35°C, the above-described growth starting from the primary nuclei proceeds.

T2 - T4 is preferably lower than 100°C and more preferably lower than 80°C.

The hollow fiber membrane solidified in step (d) may be manufactured through the following steps.

After step (d), it is also preferable to perform stretch to enlarge voids between the spherical structures to improve the water permeability and enhance breaking strength. A temperature around the membrane during stretching is preferably 50°C or higher and 140°C or lower, more preferably 55°C or higher and 120°C or lower, and still more preferably 60°C or higher and 100°C or lower. A stretching ratio is preferably 1.1 times or more and 4 times or less, and more preferably 1.1 times or more and 2 times or less.

When the membrane is stretched under a temperature condition of 50°C or higher, the membrane can be stably and homogeneously stretched. When the membrane is stretched under a temperature condition of 140°C or less, the membrane is stretched under a temperature lower than the melting point (177°C) of the polyvinylidene fluoride-based resin, and thus the membrane does not melt even when stretched, and it is possible to expand the voids while maintaining the structure of the membrane and to improve the water permeability.

In addition, it is preferable that the stretching is performed in a liquid because temperature control is easy. The stretching may be performed in a gas such as steam.

Water is preferable as a liquid owing to its easiness, but in the case of stretching at a temperature of about 90°C or higher, it is also preferable to use polyethylene glycol or the like having a low molecular weight. On the other hand, when such stretching is not performed, the water permeability and the breaking strength decrease but elongation at break and the blocking property are improved, as compared with the case of performing the stretching. Therefore, presence or absence of the stretching step and a stretching ratio in the stretching step can be appropriately set according to the use of the separation membrane.

The above-described temperature condition is applied to the temperature of the liquid when the stretching is performed in the liquid and is applied to the temperature of the gas when the stretching is performed in the gas. These manufacturing methods are not particularly limited and can be applied to any thermoplastic resin that forms a spherical structure by thermally induced phase separation.

After step (d), heat treatment may be performed. A glass transition temperature of the polyvinylidene fluoride-based resin is around -49°C, and shrinkage progresses slowly depending on a usage environment. Therefore, by previously thermally shrinking at a temperature higher than a usage temperature, it is possible to prevent shrinkage during use. The heat treatment is preferably performed at a usage temperature +10°C or higher and more preferably at a usage temperature +20°C or higher until the shrinkage ceases.

After step (d), the following steps (e) and (f) are preferably further included.

(e) A step of introducing a hydrophilic polymer into the hollow fiber membrane.
(f) A step of performing the heat treatment at 100°C or higher after step (e).

A method of introducing the hydrophilic polymer into the hollow fiber membrane will be described. Examples of the method include a method in which an aqueous solution in which the hydrophilic polymer is dissolved is passed through the hollow fiber membrane or the hollow fiber membrane is immersed in the aqueous solution in which the hydrophilic polymer is dissolved to physically adsorb the hydrophilic polymer, a method in which radiation ray irradiation is performed to make the hydrophilic polymer insoluble, or a method in which a covalent bond is formed by a chemical reaction with a reactive group present in the hollow fiber membrane. In particular, it is preferable to perform the radiation ray irradiation so that the hydrophilic polymer can be more firmly attached to the surface of the spherical structure. That is, in step (e), it is preferable that the aqueous solution in which the hydrophilic polymer is dissolved is passed through the hollow fiber membrane, and then the radiation ray irradiation is performed.

In addition, by the above-described step of introducing the hydrophilic polymer, the hydrophilic polymer can be attached to the surface of the spherical structure, and stain resistance can be improved, as compared with a method of manufacturing a membrane after kneading the hydrophilic polymer into the membrane manufacturing stock solution.

When a concentration of the hydrophilic polymer aqueous solution is too small, a sufficient amount of hydrophilic polymer is not introduced. Therefore, a concentration of the copolymer (hydrophilic polymer) in the aqueous solution is preferably 10 ppm or more, more preferably 100 ppm or more, and most preferably 500 ppm or more. However, when the concentration of the hydrophilic polymer in the aqueous solution is too high, there is a concern that elution from a module may increase, and thus the concentration of the copolymer (hydrophilic polymer) in the aqueous solution is preferably 100,000 ppm or less, and more preferably 10,000 ppm or less.

When the above-described hydrophilic polymer is poorly soluble or insoluble in water, the hydrophilic polymer may be dissolved in an organic solvent that does not dissolve the hollow fiber or in a mixed solvent of water and an organic solvent that does not dissolve the hollow fiber and is compatible with water. Specific examples of an organic solvent usable as the organic solvent or the mixed solvent include alcohol solvents such as methanol, ethanol, and propanol but the organic solvent is not limited thereto.

In addition, when a ratio of the organic solvent in the mixed solvent increases, the hollow fiber swells, and a pore diameter or the like of the hollow fiber membrane may change. Therefore, a mass fraction of the organic solvent in the mixed solvent is preferably 60% or less, more preferably 10% or less, and most preferably 1% or less.

As the radiation ray irradiation, an $\alpha$ ray, a $\beta$ ray, a $\gamma$ ray, an X ray, an ultraviolet ray, or an electron beam can be used. In view of safety and simplicity, a radiation method using an $\gamma$ ray or an electron beam is preferable. A quantity of irradiation of the radiation ray is preferably 15 kGy or more and more preferably 25 kGy or more. By setting the quantity of irradiation to 15kGy or more, the hydrophilic polymer can be effectively introduced. The quantity of irradiation is preferably 100 kGy or less. This is because when the the quantity of irradiation exceeds 100 kGy, the copolymer is likely to undergo three-dimensional crosslinking and decomposition of an ester group moiety in a carboxylic acid vinyl monomer unit.

In order to prevent a crosslinking reaction at the time of irradiation with radiation rays, an antioxidant may be used. The antioxidant is a substance that has a property of easily giving electrons to other molecules. Examples thereof includes water-soluble vitamins such as vitamin C, polyphenols, or alcohol-based solvents such as methanol, ethanol, or propanol, but is not limited thereto. These antioxidants may be used alone or in combination of two or more. In the case of using the antioxidant, it is necessary to take safety into consideration, and thus an antioxidant having low toxicity such as ethanol and propanol is preferably used.

An introduced amount of the hydrophilic polymer into the hollow fiber membrane can be quantified by the total reflection infrared spectroscopy (ATR-IR) as described above. If necessary, the introduced amount can also be quantified by the X-ray photoelectron spectroscopy (XPS) or the like.

It is also preferable to perform the heat treatment on the hollow fiber membrane after introducing the hydrophilic polymer into the hollow fiber membrane. Examples of the heat treatment step of the hollow fiber membrane include a method of applying heat in a dry state, a method of applying heat in a wet state such as water vapor, and the like. By performing the heat treatment, a part of the polyvinylidene fluoride-based resin shrinks, and a part of the hydrophilic polymer can be captured inside the spherical structure. When the heat treatment temperature is too low, a sufficient amount of hydrophilic polymer is not introduced, and thus the heat treatment temperature is preferably 100°C or higher, more preferably 120°C or higher, and most preferably 150°C or higher. On the other hand, when the heat treatment temperature is too high and exceeds the melting point of the polyvinylidene fluoride, the hollow fiber membrane is dissolved, then micropores are clogged, and the water permeability is lowered. Therefore, the heat treatment temperature is preferably equal to or lower than the melting point of the vinylidene fluoride copolymer.

Examples

Hereinafter, the present invention will be described in more detail with reference to Examples, but the present invention is not limited to these Examples.

(1) Average Diameter $Da_n$ of Region $Sa_n$ and Thickness L (membrane thickness L) of Spherical Structure Layer

A cross section perpendicular to the length direction of the hollow fiber membrane (cross section parallel to the thickness direction) was photographed at 1,000 times magnification using an electron microscope (SU1510) manufactured by HITACHI Co., Ltd., such that an arc forming the first surface was captured. In the obtained photograph, the straight lines $Ma_1$, $Ma_2$, ..., and $Ma_n$ were drawn from the first surface toward the second surface at intervals of 10 $\mu$m, and the long diameters were measured for all measurable spherical structures in the region $Sa_n$ surrounded by the straight lines $Ma_n$ and $Ma_{n+1}$ and the left and right ends of the photograph. An arithmetical average was calculated to obtain the average diameter $Da_n$.

When the first surface and the region $Sa_n$ did not fit in one photographed image, a plurality of fields of view shifted in the thickness direction to partially overlap were photographed at the same magnification. A continuous image in the thickness direction was obtained by connecting the taken photographs so that the same structures were overlapped.

In addition, the thickness L (membrane thickness L) of the spherical structure layer was obtained by the following method. The membrane thickness L is calculated from an outer diameter and an inner diameter of the hollow fiber membrane by L = (outer diameter - inner diameter)/2. The outer diameter and the inner diameter of the hollow fiber membrane are measured by cutting the hollow fiber membrane at a plane perpendicular to the axial direction with a single-edged blade or the like, observing the cross section by a method such as a microscope, and measuring a diameter of a circle. When the circle is flat, a length (long diameter) of a portion having the longest diameter and a length (short diameter) of a portion having the shortest diameter in the circle may be measured and the two lengths are averaged to obtain the diameter.

(2) Average Diameter $Db_2$ of Region $Sb_2$

A cross section (cross section parallel to the thickness direction) perpendicular to the length direction of the hollow fiber membrane was photographed at 1,000 times magnification using an electron microscope. In the obtained image, the straight lines $Mb_1$, $Mb_2$, and $Mb_3$ were drawn from the second surface toward the first surface of the separation membrane, and long diameters were measured for all measurable spherical structures in the region Sb surrounded by $Mb_2$ and $Mb_3$ and the left and right ends of the photograph. An arithmetical average of the obtained numerical values was calculated to obtain an average diameter $Db_2$.

(3) Average Constriction Diameter (average diameter of constriction diameter) $da_n$ and Number of Throats $Na_n$ of Region $Sa_n$, and Average Constriction Diameter (average diameter of constriction diameter) $db_n$ and Number of Throats $Nb_n$ of Region $Sb_n$

After coating the hollow fiber membrane with $RuO_4$, void portions were filled with a resin, and 200 photographs of a cross section perpendicular to the length direction of the hollow fiber membrane (cross section parallel to the thickness direction) were taken at intervals of 250 $\mu$m using an etching function by a focused ion beam method of an electron microscope (HeliosG4 CX) manufactured by FEI. Cubes having a side of 50 $\mu$m were photographed from a portion in contact with the arc forming the first surface toward the second surface in order, and a cuboid formed by connecting the cubes was analyzed by the pore network model. A center-of-gravity position and the throat diameter of each throat were obtained, an average throat diameter of throats at a center-of-gravity position of the region $Sa_n$ was calculated as the average constriction diameter $da_n$, and the number of throats $Na_n$ was calculated. Further, the average constriction diameter (average diameter of the constriction diameter) $db_n$ and the number of throats $Nb_n$ of the region $Sb_n$ were calculated in the same manner as described above except that an object to be analyzed by the pore network model was changed to a cuboid formed by connecting cubes which had a side of 50 $\mu$m and was photographed in order from a portion in contact with an arc forming the second surface toward the first surface.

(4) Water Permeability of Separation Membrane

A small module having a length of about 10 cm including about 1 to 10 hollow fiber membranes was prepared, distilled water was sent from the first surface under conditions of a temperature of 25°C and a filter differential pressure of 18.6 kPa to filter all the amount of the distilled water, and a value obtained by measuring the amount of permeated water ($m^3$) for a certain period of time was converted into a value per unit time (hr), a unit effective membrane area ($m^2$), and 50 kPa.

(5) Crystallization Temperature Tc of Polyvinylidene Fluoride-based Resin Solution

Using DSC-620-0 manufactured by Seiko Instruments Inc., a mixture having the same composition as a composition of a membrane manufacturing polymer stock solution made of the polyvinylidene fluoride-based resin and a solvent was sealed in a sealed DSC container, and the mixture was heated to a dissolution temperature at a heating rate of 10°C/min and held for 30 minutes to be uniformly dissolved. Thereafter, a rising temperature of the crystallization peak observed in a process in which the mixture is cooled at the cooling rate of 10°C/min was set as the crystallization temperature Tc.

(6) Actual Liquid Operation Evaluation

A commercially available unfiltered beer "GINGA KOGEN BEER" (trade name, hereinafter referred to as "evaluation beer") containing beer yeast was used. A circuit was constructed so that an evaluation beer 2L maintained at 0°C was prepared in a container, and at the same time the evaluation beer perfused the outer surface of the hollow fiber membrane via a pump from the container and returned to the container, a liquid filtered by the hollow fiber membrane was collected in a container different from the container containing the evaluation beer. At this time, an inlet pressure and an outlet pressure of the evaluation beer to the module and a pressure on a filtration side were measured. The evaluation beer was introduced such that a membrane surface linear velocity was 1.5 m/sec. A filtration rate was adjusted to 1m/d, and the operation was performed by constant flow rate filtration. In this state, the evaluation beer was perfused to the outer surface of the hollow fiber membrane at 5 $\pm$ 3°C, and cross flow filtration for partially filtering was continued. As the operation is continued, the hollow fiber membranes are clogged, so that the water permeability is lowered, but since the filtration is performed at a constant flow rate, a trans-membrane pressure (TMP) increases. The TMP is calculated from the following formula. Where Pi is the inlet pressure, Po is the outlet pressure, and Pf is the pressure on the filtration side.

$$TMP = ((Pi + Po)/2) - Pf$$

A time [h] at which the TMP increased to 150 kPa was measured, and a beer treatment amount was calculated from the following formula. When high water permeability can be maintained for a long time, the beer treatment amount is increased. When the water permeability rapidly decreases, the beer treatment amount decreases.

$$\text{Beer treatment amount } [L/m^2] = \text{filtration rate } 100 \ [L/m^2/h] \times \text{time } [h] \text{ for which pressure reach } 150 \text{ kPa.}$$

(7) Blocking property

With respect to the evaluation beer, the liquid to be filtered and a filtrate were sampled and then allowed to stand at a room temperature for 30 minutes, and a turbidity thereof was measured by a nephelometric type turbidity meter. Then a blocking rate was calculated from the following formula.

$$\text{Blocking rate (\%)} = (\text{turbidity of raw liquid - turbidity of filtrate})/\text{turbidity of raw liquid}$$

(8) Measurement of Content of Hydrophilic Polymer (Coat Polymer)

A 2 cm hollow fiber membrane was dissolved in 1 mL of dimethyl sulfoxide and measured by $^1$H-NMR using JNM-ECZ400R manufactured by JEOL Ltd. This measurement was performed at any two points of the hollow fiber membrane, and an amount of the hydrophilic polymer was determined with respect to a ratio of the detected PVDF defined as 100. In Examples and Comparative Examples, the following abbreviations are used for the hydrophilic polymer.

PVP: polyvinylpyrrolidone
PVP/PVAc: vinylpyrrolidone/vinyl acetate random copolymer
PEG: polyethylene glycol
PEGMA: polyethylene glycol methacrylate

(9) Chemical Wash Resistance

The hollow fiber membrane into which the hydrophilic polymer was introduced was immersed in ethanol for 30 minutes, then immersed in pure water for 60 minutes to be wet, and then washed in an oven at 95°C for 5 hours. After that, the hollow fiber membrane was immersed in an aqueous solution containing sodium hypochlorite at an effective chlorine concentration of 3,000 ppm, sodium hydroxide at a concentration of 0.04% by mass for 30 hours, and then washed with running water for 2 hours. A content of the hydrophilic polymer in this hollow fiber membrane was measured in the same manner as the measurement of the content of the hydrophilic polymer described above. From the results, a percentage of the ratio (% by mass) of the hydrophilic polymer to PVDF determined in (9) with respect to the ratio (% by mass) of the hydrophilic polymer to PVDF determined in (8) was determined, and the percentage was shown in a table as a "residual ratio of coat polymer after immersion in chemical solution".

[Example 1]

A 38% by weight vinylidene fluoride homopolymer having a weight average molecular weight of 417,000 and a 62% by weight gamma-butyrolactone were dissolved at 150°C. The resin solution was held at a pressure of 1.2 MPa at 100°C (primary nucleus holding temperature T2), which was within a range of $(Tc + 20)$°C or higher and $(Tc + 55)$°C or less, for 20 seconds.

Thereafter, the resin solution was sent to the spinneret through a pipe in which the outer peripheral portion was heated to 108°C (T3). The residence time in the pipe heated to 108°C was 7.05 seconds (time for applying temperature gradient), and a radius of the pipe was 4.0 mm (thickness Ls of a polyvinylidene fluoride-based resin applied with the temperature gradient).

While the resin solution was passed through an outer pipe of the spinneret, a 90% by weight aqueous solution of $\gamma$-butyrolactone at 100°C was simultaneously discharged from an inner pipe of the spinneret. The discharged resin solution was solidified in a bath composed of 90% by weight aqueous solution of $\gamma$-butyrolactone and having a temperature of 25°C (cooling bath temperature T4) for 5 minutes. After solidification, the obtained membrane was washed with water and stretched 1.5 times in hot water at 95°C. The stretched hollow fiber membrane was washed with water, immersed in 30% glycerin for 2 hours, and then air-dried overnight. Thereafter, heat treatment was performed for 1 hour under vapor at 125°C.

The cross section perpendicular to the length direction of the obtained hollow fiber membrane had a spherical structure, the average diameter $Dai$ of the region $Sa_1$ was 2.62 $\mu$m, the average diameter $Db_2$ of the region $Sb_2$ was 1.84 $\mu$m, the natural number $i_{min}$ satisfying the above conditions (1) and (2) was 5, and the average diameter $Da_5$ of the spherical structure in the region $Sa_5$ was 2.02 $\mu$m. The average constriction diameter $da_1$ of the region $Sa_1$ was 1.40 $\mu$m, the average constriction diameter $db_2$ of the region $Sb_2$ was 1.14 $\mu$m, the natural number $j_{min}$ satisfying the above conditions (1) and (2) was 5, and the average constriction diameter $da_5$ of the spherical structure gap in the region $Sa_5$ was 1.20 $\mu$m. A pure water permeability of this membrane was 3.6 m/hr, a beer filtration rate was 400 L/m$^2$, and the blocking rate was 92%, and thus the water permeability and the separability could be maintained over a long time.

[Example 2]

A 38% by weight vinylidene fluoride homopolymer having a weight average molecular weight of 417,000 and a 62% by weight gamma-butyrolactone were dissolved at 150°C. The resin solution was held at a pressure of 1.2 MPa at 100°C, which was within a range of $(Tc + 20)$°C or higher and $(Tc + 55)$°C or less, for 20 seconds.

Thereafter, the resin solution was sent to the spinneret through a pipe in which the outer peripheral portion was heated to 125°C. The residence time of the resin solution in the pipe heated to 125°C was 7.05 seconds, and the radius of the pipe was 4.0 mm.

While the resin solution was passed through an outer pipe of the spinneret, a 90% by weight aqueous solution of $\gamma$-butyrolactone at 100°C was simultaneously discharged from an inner pipe of a double-pipe spinneret. The discharged resin solution was solidified in a bath composed of 90% by weight aqueous solution of $\gamma$-butyrolactone and having a temperature of 25°C for 1 minute. After solidification, the obtained membrane was washed with water and stretched 1.5 times in hot water at 95°C. The stretched hollow fiber membrane was washed with water, immersed in 30% glycerin for 2 hours, and then air-dried overnight. Thereafter, heat treatment was performed for 1 hour under vapor at 125°C.

The cross section perpendicular to the length direction of the obtained hollow fiber membrane had a spherical structure, the average diameter $Dai$ of the region $Sa_1$ was 3.40 $\mu$m, the average diameter $Db_2$ of the region $Sb_2$ was 2.15 $\mu$m, the natural number $i_{min}$ satisfying the above conditions (1) and (2) was 5, and the average diameter $Da_5$ of the spherical structure in the region $Sa_5$ was 2.30 $\mu$m. The average constriction diameter $da_1$ of the region $Sa_1$ was 1.45 $\mu$m, the average constriction diameter $db_2$ of the region $Sb_2$ was 1.14 $\mu$m, the natural number $j_{min}$ satisfying the above conditions (1) and (2) was 5, and the average constriction diameter $da_5$ of the spherical structure gap in the region $Sa_5$ was 1.24 $\mu$m. A pure water permeability of this membrane was 4.4 m/hr, a beer filtration rate was 700 L/m$^2$, and the blocking rate was 82%, and thus the water permeability and the separability could be maintained over a long time.

[Example 3]

A 36% by weight vinylidene fluoride homopolymer having a weight average molecular weight of 417,000 and a 64% by weight gamma-butyrolactone were dissolved at 150°C. The resin solution was held at a pressure of 1.2 MPa at 99°C, which was within a range of (Tc + 20)°C or higher and (Tc + 55)°C or less, for 20 seconds.

Thereafter, the resin solution was sent to the spinneret through a pipe in which the outer peripheral portion was heated to 108°C. The residence time of the resin solution in the pipe heated to 108°C was 9.50 seconds, and the radius of the pipe was 4.0 mm.

While the resin solution was passed through an outer pipe of the spinneret, a 90% by weight aqueous solution of $\gamma$-butyrolactone at 100°C was simultaneously discharged from an inner pipe of the spinneret. The discharged resin solution was solidified in a bath composed of the 90% by weight aqueous solution of $\gamma$-butyrolactone and having a temperature of 25°C for 5 minutes. After solidification, the obtained membrane was washed with water and stretched 1.5 times in hot water at 95°C. The stretched hollow fiber membrane was washed with water, immersed in 30% glycerin for 2 hours, and then air-dried overnight. Thereafter, heat treatment was performed for 1 hour under vapor at 125°C.

The cross section perpendicular to the length direction of the obtained hollow fiber membrane had a spherical structure, the average diameter $Dai$ of the region $Sa_1$ was 3.70 $\mu$m, the average diameter $Db_2$ of the region $Sb_2$ was 1.86 $\mu$m, the natural number $i_{min}$ satisfying the above conditions (1) and (2) was 6, and the average diameter $Da_6$ of the spherical structure in the region $Sa_6$ was 2.10 $\mu$m. The average constriction diameter $da_1$ of the region $Sa_1$ was 1.66 $\mu$m, the average constriction diameter $db_2$ of the region $Sb_2$ was 1.27 $\mu$m, the natural number $j_{min}$ satisfying the above conditions (1) and (2) was 6, and the average constriction diameter $da_6$ of the spherical structure gap in the region $Sa_6$ was 1.29 $\mu$m. A pure water permeability of this membrane was 4.6 m/hr, a beer filtration rate was 450 L/m$^2$, and the blocking rate was 91%, and thus the water permeability and the separability could be maintained over a long time.

[Example 4]

A 38% by weight vinylidene fluoride homopolymer having a weight average molecular weight of 417,000 and a 62% by weight dimethyl sulfoxide were dissolved at 120°C. The resin solution was held at a pressure of 1.2 MPa at 75°C, which was within a range of (Tc + 20)°C or higher and (Tc + 55)°C or less, for 20 seconds.

Thereafter, the resin solution was sent to a spinneret heated to 85°C, and was discharged after 5.8 seconds from entering the spinneret. A flow channel width of an annular nozzle of the spinneret was 1.75 mm.

While the resin solution was passed through an outer pipe of the spinneret, a 90% by weight aqueous solution of dimethyl sulfoxide at 75°C was simultaneously discharged from an inner pipe of the spinneret. The discharged resin solution was solidified in a bath composed of the 90% by weight aqueous solution of dimethyl sulfoxide and having a temperature of 18°C for 5 minutes. After solidification, the obtained membrane was washed with water and stretched 1.5 times in hot water at 95°C. The stretched hollow fiber membrane was washed with water, immersed in 30% glycerin for 2 hours, and then air-dried overnight. Thereafter, heat treatment was performed for 1 hour under vapor at 125°C.

The cross section perpendicular to the length direction of the obtained hollow fiber membrane had a spherical structure, the average diameter $Dai$ of the region $Sa_1$ was 3.52 $\mu$m, the average diameter $Db_2$ of the region $Sb_2$ was 1.90 $\mu$m, the natural number $i_{min}$ satisfying the above conditions (1) and (2) was 7, and the average diameter $Da_7$ of the spherical structure in the region $Sa_7$ was 1.90 $\mu$m. The average constriction diameter $da_1$ of the region $Sa_1$ was

1.50 $\mu$m, the average constriction diameter $db_2$ of the region $Sb_2$ was 1.27 $\mu$m, the natural number $j_{min}$ satisfying the above conditions (1) and (2) was 7, and the average constriction diameter $da_7$ of the spherical structure gap in the region $Sa_7$ was 1.31 $\mu$m. A pure water permeability of this membrane was 4.3 m/hr, a beer filtration rate was 480 L/m$^2$, and the blocking rate was 90%, and thus the water permeability and the separability could be maintained over a long time.

[Example 5]

A 38% by weight vinylidene fluoride homopolymer having a weight average molecular weight of 417,000 and a 62% by weight gamma-butyrolactone were dissolved at 150°C. The resin solution was held at a pressure of 1.2 MPa at 98°C, which was within a range of (Tc + 20)°C or higher and (Tc + 55)°C or less, for 20 seconds.

Thereafter, the resin solution was sent to the spinneret through a pipe in which the outer peripheral portion was heated to 132°C. The residence time of the resin solution in the pipe heated to 132°C was 7.05 seconds, and the radius of the pipe was 4.0 mm.

While the resin solution was passed through an outer pipe of the spinneret, a 90% by weight aqueous solution of $\gamma$-butyrolactone at 100°C was simultaneously discharged from an inner pipe of the spinneret. The discharged resin solution was solidified in a bath composed of the 90% by weight aqueous solution of $\gamma$-butyrolactone and having a temperature of 25°C for 5 minutes. After solidification, the obtained membrane was washed with water and stretched 1.5 times in hot water at 95°C. The stretched hollow fiber membrane was washed with water, immersed in 30% glycerin for 2 hours, and then air-dried overnight. Thereafter, heat treatment was performed for 1 hour under vapor at 125°C.

The cross section perpendicular to the length direction of the obtained hollow fiber membrane had a spherical structure, the average diameter Dai of the region $Sa_1$ was 4.30 $\mu$m, the average diameter $Db_2$ of the region $Sb_2$ was 2.24 $\mu$m, the natural number $i_{min}$ satisfying the above conditions (1) and (2) was 12, and the average diameter $Da_{12}$ of the spherical structure in the region $Sa_{12}$ was 2.50 $\mu$m. The average constriction diameter $da_1$ of the region $Sa_1$ was 1.55 $\mu$m, the average constriction diameter $db_2$ of the region $Sb_2$ was 1.24 $\mu$m, the natural number $j_{min}$ satisfying the above conditions (1) and (2) was 12, and the average constriction diameter $da_{12}$ of the spherical structure gap in the region $Sa_{12}$ was 1.34 $\mu$m. A pure water permeability of this membrane was 5.1 m/hr, a beer filtration rate was 720 L/m$^2$, and the blocking rate was 81%, and thus the water permeability and the separability could be maintained over a long time.

[Example 6]

A 38% by weight vinylidene fluoride homopolymer having a weight average molecular weight of 417,000 and a 62% by weight gamma-butyrolactone were dissolved at 150°C. The resin solution was held at a pressure of 1.2 MPa at 97°C, which was within a range of (Tc + 20)°C or higher and (Tc + 55)°C or less, for 20 seconds.

Thereafter, the resin solution was sent to the spinneret through a pipe in which the outer peripheral portion was heated to 140°C. The residence time of the resin solution in the pipe heated to 140°C was 6.83 seconds, and the radius of the pipe was 4.0 mm.

While the resin solution was passed through an outer pipe of the spinneret, a 90% by weight aqueous solution of $\gamma$-butyrolactone at 100°C was simultaneously discharged from an inner pipe of the spinneret. The discharged resin solution was solidified in a bath composed of the 90% by weight aqueous solution of $\gamma$-butyrolactone and having a temperature of 25°C for 5 minutes. After solidification, the obtained membrane was washed with water and stretched 1.5 times in hot water at 95°C. The stretched hollow fiber membrane was washed with water, immersed in 30% glycerin for 2 hours, and then air-dried overnight. Thereafter, heat treatment was performed for 1 hour under vapor at 125°C.

The cross section perpendicular to the length direction of the obtained hollow fiber membrane had a spherical structure, the average diameter Dai of the region $Sa_1$ was 4.60 $\mu$m, the average diameter $Db_2$ of the region $Sb_2$ was 2.29 $\mu$m, the natural number $i_{min}$ satisfying the above conditions (1) and (2) was 17, and the average diameter $Da_{12}$ of the spherical structure in the region $Sa_{12}$ was 2.47 $\mu$m. The average constriction diameter $da_1$ of the region $Sa_1$ was 1.86 $\mu$m, the average constriction diameter $db_2$ of the region $Sb_2$ was 1.32 $\mu$m, the natural number $j_{min}$ satisfying the above conditions (1) and (2) was 17, and the average constriction diameter $da_{17}$ of the spherical structure gap in the region $Sa_{17}$ was 1.60 $\mu$m. A pure water permeability of this membrane was 5.8 m/hr, a beer filtration rate was 800 L/m$^2$, and the blocking rate was 72%, and thus the water permeability could be maintained over a long time but the separability was slightly deteriorated.

[Comparative Example 1]

A hollow fiber membrane was obtained in the same manner as in Example 1 except that the temperature of the outer peripheral portion of the pipe was 100°C.

A cross section perpendicular to a length direction of the obtained hollow fiber membrane had a spherical structure, the average diameter Dai of the region $Sa_1$ was 1.83 $\mu$m, the average diameter $Db_2$ of the region $Sb_2$ was

1.79 $\mu$m, and the natural number i satisfying the above conditions (1) and (2) was not present.

The average constriction diameter $da_1$ of the region $Sa_1$ was 1.14 $\mu$m, the average constriction diameter $db_2$ of the region $Sb_2$ was 1.14 $\mu$m, and the natural number j satisfying the above conditions (1) and (2) was not present.

A pure water permeability of this membrane was 2.0 m/hr, a beer filtration rate was 150 L/m$^2$, and the blocking rate was 96%, and thus the separability was high but the water permeability could not be maintained over a long time.

[Comparative Example 2]

A 38% by weight vinylidene fluoride homopolymer having a weight average molecular weight of 417,000 and a 62% by weight gamma-butyrolactone were dissolved at 150°C. The resin solution was held at a pressure of 1.2 MPa at 95°C, which was within a range of (Tc + 20)°C or higher and (Tc + 55)°C or less, for 20 seconds, and then the resin solution was sent to a spinneret in which an outer pipe was heated to 99°C. The resin solution was discharged after 1.68 seconds from entering the spinneret. While the resin solution was passed through the outer pipe of the spinneret, a 90% by weight aqueous solution of $\gamma$-butyrolactone at 95°C was simultaneously discharged from an inner pipe of the spinneret. The discharged resin solution was solidified in a bath composed of the 90% by weight aqueous solution of $\gamma$-butyrolactone and having a temperature of 5°C for 5 minutes. After solidification, the obtained membrane was washed with water and stretched 1.5 times in hot water at 95°C. The stretched hollow fiber membrane was washed with water, immersed in 30% glycerin for 2 hours, and then air-dried overnight. Thereafter, heat treatment was performed for 1 hour under vapor at 125°C.

The cross section perpendicular to the length direction of the obtained hollow fiber membrane had a spherical structure, the average diameter Dai of the region $Sa_1$ was 2.58 $\mu$m, the average diameter $Db_2$ of the region $Sb_2$ was 1.86 $\mu$m, the natural number $i_{min}$ satisfying the above conditions (1) and (2) was 2, and the average diameter $Da_2$ of the spherical structure in the region $Sa_2$ was 1.96 $\mu$m. The average constriction diameter $da_1$ of the region $Sa_1$ was 1.39 $\mu$m, the average constriction diameter $db_2$ of the region $Sb_2$ was 1.14 $\mu$m, the natural number $j_{min}$ satisfying the above conditions (1) and (2) was 2, and the average constriction diameter daz of the spherical structure gap in the region $Sa_2$ was 1.15 $\mu$m. A pure water permeability of this membrane was 2.5 m/hr, a beer filtration rate was 250 L/m$^2$, and the blocking rate was 96%, and thus the separability was high but the water permeability could not be maintained over a long time.

[Comparative Example 3]

A 38% by weight vinylidene fluoride homopolymer having a weight average molecular weight of 417,000 and a 62% by weight dimethyl sulfoxide were dissolved at 120°C. The resin solution was held at a pressure of 1.2 MPa at 75°C, which was within a range of (Tc + 20)°C or higher and (Tc + 55)°C or less, for 20 seconds, and then the resin solution was sent to a spinneret in which an outer pipe was heated to 80°C. The resin solution was discharged after 1.68 seconds from entering the spinneret. While the resin solution was passed through an outer pipe of the spinneret, a 90% by weight aqueous solution of dimethyl sulfoxide at 75°C was simultaneously discharged from an inner pipe of the spinneret. The discharged resin solution was solidified in a bath composed of the 90% by weight aqueous solution of dimethyl sulfoxide and having a temperature of 5°C for 5 minutes. After solidification, the obtained membrane was washed with water and stretched 1.5 times in hot water at 95°C. The stretched hollow fiber membrane was washed with water, immersed in 30% glycerin for 2 hours, and then air-dried overnight. Thereafter, heat treatment was performed for 1 hour under vapor at 125°C.

The cross section perpendicular to the length direction of the obtained hollow fiber membrane had a spherical structure, the average diameter Dai of the region $Sa_1$ was 2.54 $\mu$m, the average diameter $Db_2$ of the region $Sb_2$ was 1.81 $\mu$m, the natural number $i_{min}$ satisfying the above conditions (1) and (2) was 2, and the average diameter $Da_2$ of the spherical structure in the region $Sa_2$ was 1.89 $\mu$m. The average constriction diameter $da_1$ of the region $Sa_1$ was 1.34 $\mu$m, the average constriction diameter $db_2$ of the region $Sb_2$ was 1.10 $\mu$m, the natural number $j_{min}$ satisfying the above conditions (1) and (2) was 2, and the average constriction diameter daz of the spherical structure gap in the region $Sa_2$ was 1.14 $\mu$m. A pure water permeability of this membrane was 2.7 m/hr, a beer filtration rate was 220 L/m$^2$, and the blocking rate was 96%, and thus the separability was high but the water permeability could not be maintained over a long time.

[Comparative Example 4]

A 38% by weight vinylidene fluoride homopolymer having a weight average molecular weight of 417,000 and a 62% by weight dimethyl sulfoxide were dissolved at 120°C. The resin solution was held at a pressure of 1.2 MPa at 75°C, which was within a range of (Tc + 20)°C or higher and (Tc + 55)°C or less, for 20 seconds, and then the resin solution was sent to a spinneret in which an outer pipe was heated to 138°C. The resin solution was discharged after 5.23 seconds from entering the spinneret.

While the resin solution was passed through the outer pipe of the spinneret, a 90% by weight aqueous solution of γ-butyrolactone at 75°C was simultaneously discharged from an inner pipe of the spinneret. The discharged resin solution was solidified in a bath composed of the 90% by weight aqueous solution of γ-butyrolactone and having a temperature of 5°C for 5 minutes. After solidification, the obtained membrane was washed with water and stretched 1.5 times in hot water at 95°C. The stretched hollow fiber membrane was washed with water, immersed in 30% glycerin for 2 hours, and then air-dried overnight. Thereafter, heat treatment was performed for 1 hour under vapor at 125°C.

A cross section perpendicular to a length direction of the obtained hollow fiber membrane had a spherical structure, the average diameter $Da_i$ of the region $Sa_1$ was 3.35 μm, the average diameter $Db_2$ of the region $Sb_2$ was 3.11 μm, and the natural number $i_{min}$ satisfying the above conditions (1) and (2) was not present.

This membrane had a pure water permeability of 7.8 m/hr and was not subjected to a beer filtration test.

Manufacturing conditions of the respective hollow fiber membranes are shown in Tables 1 and 2, and evaluation results of the obtained hollow fiber membranes are shown in Tables 3 and 4. In Tables 3 and 4, a specific numerical value of an item represented by including a value of n = i such as "$Da_1/Da_i$" represents a numerical value when $i_{min}$ is applied as i. That is, in Tables 3 and 4, the value specifically indicated in the row of "$Da_i/Da_i$" is substantially a numerical value of "$Da_1/Da_{imin}$". This also applies to the case where i is j and k.

Table 1

| | | Example 1 | Example 2 | Example 3 | Example 4 | Example 5 | Example 6 |
|---|---|---|---|---|---|---|---|
| Membrane manufacturing condition | Solvent | GBL | GBL | GBL | DMSO | GBL | GBL |
| | Polymer concentration (%) | 38 | 38 | 36 | 38 | 38 | 38 |
| | Crystallization temperature Tc (°C) | 56 | 56 | 52 | 40 | 56 | 56 |
| | Dissolution temperature T1 (°C) | 150 | 150 | 150 | 120 | 150 | 150 |
| | Primary nucleus holding temperature T2 (°C) | 100 | 100 | 99 | 75 | 98 | 97 |
| | Heating temperature T3 (°C) | 108 | 125 | 108 | 85 | 132 | 140 |
| | Time t (seconds) for applying temperature gradient | 7.05 | 7.05 | 9.50 | 5.80 | 7.05 | 6.83 |
| | $\Delta T \times t$ | 56 | 176 | 86 | 58 | 240 | 294 |
| | Cooling bath composition | GBL 90% | GBL 90% | GBL 90% | DMSO 90% | GBL 90% | GBL 90% |
| | Cooling bath temperature T4 (°C) | 25 | 25 | 25 | 18 | 25 | 25 |
| | (Tc - T4)/(T2 - T4) | 0.41 | 0.41 | 0.36 | 0.39 | 0.42 | 0.43 |

**EP 4 331 714 A1**

Table 2

| | | | Comparative Example 1 | Comparative Example 2 | Comparative Example 3 | Comparative Example 4 |
|---|---|---|---|---|---|---|
| Membrane manufacturing condition | | Solvent | GBL | GBL | DMSO | DMSO |
| | | Polymer concentration (%) | 38 | 38 | 38 | 38 |
| | | Crystallization temperature Tc (°C) | 56 | 56 | 40 | 40 |
| | | Dissolution temperature T1 (°C) | 150 | 160 | 120 | 120 |
| | | Primary nucleus holding temperature T2 (°C) | 100 | 95 | 75 | 75 |
| | | Heating temperature T3 (°C) | 100 | 99 | 80 | 138 |
| | | Time t (seconds) for applying temperature gradient | 0 | 1.68 | 1.68 | 5.23 |
| | | $\Delta T \times t$ | 0 | 7 | 8 | 329 |
| | | Cooling bath composition | GBL 90% | GBL 90% | DMSO 90% | DMSO 90% |
| | | Cooling bath temperature T4 (°C) | 25 | 5 | 5 | 5 |
| | | (Tc - T4)/(T2 - T4) | 0.41 | 0.57 | 0.50 | 0.50 |

Table 3

| | | | Example 1 | Example 2 | Example 3 | Example 4 | Example 5 | Example 6 |
|---|---|---|---|---|---|---|---|---|
| Membrane structure | | Membrane thickness L ($\mu$m) | 244 | 263 | 186 | 228 | 248 | 225 |
| | | Natural number $i_{min}$ | 5 | 5 | 6 | 7 | 12 | 17 |
| | | Average diameter $Da_1$ ($\mu$m) of spherical structure | 2.62 | 3.40 | 3.70 | 3.52 | 4.30 | 4.60 |
| | | Average diameter $Da_2$ ($\mu$m) of spherical structure | 2.48 | 3.04 | 3.45 | 3.27 | 4.10 | 4.28 |
| | | Average diameter $Da_i$ ($\mu$m) of spherical structure | 2.02 | 2.30 | 2.10 | 2.07 | 2.50 | 2.47 |
| | | Average diameter $Db_2$ ($\mu$m) of spherical structure | 1.84 | 2.15 | 1.86 | 1.90 | 2.24 | 2.29 |
| | | $Da_1/Da_i$ | 1.30 | 1.48 | 1.76 | 1.70 | 1.72 | 1.86 |
| | | $Da_1/Da_2$ | 1.06 | 1.12 | 1.07 | 1.08 | 1.05 | 1.07 |

(continued)

| | | Example 1 | Example 2 | Example 3 | Example 4 | Example 5 | Example 6 |
|---|---|---|---|---|---|---|---|
| | $0.75 \times L/10$ (decimal point or less is truncated) | 18 | 19 | 13 | 17 | 18 | 16 |
| | Natural number $j_{min}$ | 5 | 5 | 6 | 7 | 12 | 17 |
| | Average diameter $da_1$ ($\mu$m) of constriction diameter | 1.40 | 1.45 | 1.66 | 1.50 | 1.55 | 1.86 |
| | Average diameter $da_j$ ($\mu$m) of constriction diameter | 1.20 | 1.24 | 1.29 | 1.31 | 1.34 | 1.60 |
| | Average diameter $db_2$ ($\mu$m) of constriction diameter | 1.14 | 1.14 | 1.27 | 1.27 | 1.24 | 1.32 |
| | $da_1/da_j$ | 1.17 | 1.17 | 1.29 | 1.15 | 1.16 | 1.16 |
| | $da_j - db_2$ | 0.06 | 0.10 | 0.02 | 0.04 | 0.10 | 0.28 |
| | $0.5 \times L/10$ (decimal point or less is truncated) | 12 | 13 | 9 | 11 | 12 | 11 |
| | Natural number $k_{min}$ | 4 | 5 | 6 | 9 | 12 | 13 |
| | Number of throats $Na_1$ (number) | 1168 | 1147 | 826 | 1186 | 1050 | 1008 |
| | Number of throats $Na_k$ (number) | 1361 | 1378 | 945 | 1390 | 1342 | 1126 |
| | Number of throats $Nb_2$ (number) | 1625 | 1750 | 1033 | 1781 | 1678 | 1623 |
| | $Na_1/Na_k$ | 0.86 | 0.83 | 0.87 | 0.85 | 0.78 | 0.90 |
| | $Nb_2 - Na_k$ | 264 | 372 | 88 | 391 | 336 | 497 |
| Membrane performance | Water permeability (m/hr) | 3.6 | 4.4 | 4.6 | 4.3 | 5.1 | 5.8 |
| | Beer treatment amount (L/m$^2$) | 400 | 700 | 450 | 480 | 720 | 800 |
| | Blocking rate (%) | 92 | 82 | 91 | 90 | 81 | 72 |

Table 4

| | | Comparative Example 1 | Comparative Example 2 | Comparative Example 3 | Comparative Example 4 |
|---|---|---|---|---|---|
| | Membrane thickness L ($\mu$m) | 237 | 247 | 181 | 225 |
| | Natural number $i_{min}$ | | 2 | 2 | |

(continued)

| | | Comparative Example 1 | Comparative Example 2 | Comparative Example 3 | Comparative Example 4 |
|---|---|---|---|---|---|
| Membrane structure | Average diameter $Da_1$ ($\mu$m) of spherical structure | 1.83 | 2.58 | 2.54 | 3.35 |
| | Average diameter $Da_2$ ($\mu$m) of spherical structure | 1.81 | 1.96 | 1.89 | 3.06 |
| | Average diameter $Da_i$ ($\mu$m) of spherical structure | | 1.96 | 1.89 | |
| | Average diameter $Db_2$ ($\mu$m) of spherical structure | 1.79 | 1.86 | 1.81 | 3.11 |
| | $Da_1/Da_i$ | | 1.32 | 1.34 | |
| | $Da_1/Da_2$ | 1.01 | 1.32 | 1.34 | 1.09 |
| | $0.75 \times L/10$ (decimal point or less is truncated) | | 18 | 13 | 16 |
| | Natural number $j_{min}$ | | 2 | 2 | |
| | Average diameter $da_1$ ($\mu$m) of constriction diameter | 1.14 | 1.39 | 1.34 | |
| | Average diameter $da_j$ ($\mu$m) of constriction diameter | | 1.15 | 1.14 | |
| | Average diameter $db_2$ ($\mu$m) of constriction diameter | 1.14 | 1.14 | 1.10 | |
| | $da_1/da_j$ | | 1.21 | 1.18 | |
| | $da_j - db_2$ | | 0.01 | 0.04 | |
| | $0.5 \times L/10$ (decimal point or less is truncated) | 11 | 12 | 9 | |
| | Natural number $k_{min}$ | | 2 | 2 | |
| | Number of throats $Na_1$ (number) | 1781 | 1066 | 1011 | |
| | Number of throats $Na_k$ (number) | | 1435 | 1564 | |
| | Number of throats $Nb_2$ (number) | 1601 | 1711 | 1823 | |
| | $Na_1/Na_k$ | | 0.74 | 0.65 | |
| | $Nb_2 - Na_k$ | | 276 | 259 | |

(continued)

| | | Comparative Example 1 | Comparative Example 2 | Comparative Example 3 | Comparative Example 4 |
|---|---|---|---|---|---|
| Membrane performance | Water permeability (m/hr) | 2.0 | 2.5 | 2.7 | 7.8 |
| | Beer treatment amount (L/m$^2$) | 150 | 250 | 220 | |
| | Blocking rate (%) | 96 | 96 | 96 | |

[Example 7]

As a hydrophilic polymer (coat polymer), PVP/PVAc (Kollidon VA64; manufactured by BASF) was used. The hollow fiber membrane prepared in Example 1 was immersed for 1 hour in a 1.0% by mass ethanol aqueous solution in which 1,000 ppm of hydrophilic polymer composed of the produced vinylpyrrolidone/vinyl acetate random copolymer was dissolved, and was then irradiated with $\gamma$ rays of 25 kGy to introduce the vinylpyrrolidone/vinyl propionate random copolymer into the hollow fiber membrane, followed by heat treatment in an oven at 150°C for 1 hour.

The obtained hollow fiber membrane was subjected to the above-described $^1$H-NMR measurement to measure a PVP/PVAc content (parts by mass of the hydrophilic polymer when the polyvinylidene fluoride-based resin was 100 parts by mass), and the pure water permeability after chemical washing and after the introduction of the hydrophilic polymer were measured.

[Example 8]

A hydrophilic polymer was introduced in the same manner as in Example 7 except that PEG was used as the hydrophilic polymer, and results of Table 5 were obtained.

[Example 9]

A hydrophilic polymer was introduced in the same manner as in Example 7 except that PEGMA was used as the hydrophilic polymer, and results of Table 5 were obtained.

[Example 10]

After performing heat treatment in an oven at 125°C for 1 hour, the hollow fiber membrane prepared in Example 1 was immersed in a 1.0% by mass ethanol aqueous solution in which PVP/PVAc 10,000 ppm were dissolved for 1 hour, and was then irradiated with $\gamma$ rays of 25 kGy to introduce PVP/PVAc into the hollow fiber membrane.

Table 5

| | Example 7 | Example 8 | Example 9 | Example 10 |
|---|---|---|---|---|
| Coat polymer content (parts by mass) | 2.238 | 1.974 | 1.061 | 0.545 |
| Water permeability without coat polymer (mlh) | 3.6 | 3.6 | 3.6 | 3.2 |
| Water permeability with coat polymer (m/h) | 3.8 | 4.0 | 4.1 | 2.5 |
| Residual ratio (%) of coat polymer after immersion in chemical solution | 49% | 10% | 61% | 7.7% |

Although the present invention has been described in detail with reference to specific embodiments, it is apparent to those skilled in the art that various changes and modifications can be made without departing from the spirit and scope of the present invention. The present application is based on the Japanese patent application (Japanese Patent Application No. 2021-075668) filed on April 28, 2021, the Japanese patent application (Japanese Patent Application No. 2021-108523) filed on Jun 30, 2021, and the Japanese patent application (Japanese Patent Application No. 2021-138656) filed on August 27, 2021, and the contents thereof are incorporated herein by reference.

INDUSTRIAL APPLICABILITY

The hollow fiber membrane of the present invention is suitably used, for example, for water treatment applications such as wastewater treatment, water purification treatment, industrial water manufacturing, and the like, and applications such as food and pharmaceutical manufacturing. In addition, the hollow fiber membrane of the present invention is suitably used, for example, as a microfiltration membrane or ultrafiltration membrane used for these applications and the like.

REFERENCE SIGNS LIST

1 spinneret
2 pipe
11 inner nozzle
12 annular nozzle
111 inner nozzle inlet
112 inner nozzle outlet
121 annular nozzle inlet
122 annular nozzle outlet
131 pipe inlet
132 pipe outlet

**Claims**

1.  A hollow fiber membrane comprising a layer of a spherical structure of a resin, wherein

    the layer of the spherical structure has a thickness L of 60 $\mu$m or more and 500 $\mu$m or less,
    the layer of the spherical structure has a first surface and a second surface,
    an average diameter $Da_n$ of the spherical structure in a region $Sa_n$ of $10 \times (n - 1)$ to $10 \times n$ $\mu$m from the first surface and an average diameter $Db_n$ of the spherical structure in a region $Sb_n$ of $10 \times (n - 1)$ to $10 \times n$ $\mu$m from the second surface satisfy a relation of $Da_1 > Db_2$, and
    a minimum value $i_{min}$ of a natural number i satisfying the following conditions (1) and (2) satisfies a relation of $3 \leq i_{min} \leq (L - 20)/10$,

    $$(1)\ Da_1/Da_i \geq 1.1$$

    $$(2)\ -0.3\ \mu m \leq Da_i - Db_2 \leq 0.3\ \mu m$$

    provided that n is a natural number, and in the relation of $3 \leq i_{min} \leq (L - 20)/10$, a decimal point or less of (L - 20)/10 is truncated.

2.  The hollow fiber membrane according to claim 1, wherein

    a relation of $i_{min} \leq L \times 0.75/10$ is satisfied,
    provided that in the relation of $i_{min} \leq L \times 0.75/10$, a decimal point or less of $L \times 0.75/10$ is truncated.

3.  The hollow fiber membrane according to claim 1 or 2, wherein
    a relation of $1.10 < Da_1/Da_{imin} < 4.00$ is satisfied.

4.  The hollow fiber membrane according to any one of claims 1 to 3, wherein
    a relation of $0.50\ \mu m < Dbz < 2.00\ \mu m$ is satisfied.

5.  The hollow fiber membrane according to any one of claims 1 to 4, wherein
    a relation of $1.00 \leq Da_1/Da_2 \leq 1.10$ is satisfied.

6. The hollow fiber membrane according to any one of claims 1 to 5, wherein
   the first surface is on a side of liquid to be filtered.

7. The hollow fiber membrane according to any one of claims 1 to 6, wherein
   the first surface is an outer surface of the hollow fiber membrane.

8. The hollow fiber membrane according to any one of claims 1 to 7, wherein

   when a throat diameter obtained by a pore network model analysis for the hollow fiber membrane is defined as a constriction diameter of a spherical structure gap,
   an average diameter $da_n$ of the constriction diameter of the spherical structure gap in the region $Sa_n$ of $10 \times (n-1)$ to $10 \times n$ $\mu$m from the first surface, and
   an average diameter $db_n$ of the constriction diameter of the spherical structure gap in the region $Sb_n$ of $10 \times (n-1)$ to $10 \times n$ $\mu$m from the second surface satisfy a relation of $da_1 > dbz$, and
   a minimum value $j_{min}$ of a natural number $j$ satisfying the following conditions (1) and (2) satisfies a relation of $3 \le j_{min} \le (L - 20)/10$,

$$(1)\ da_1/da_j \ge 1.15$$

$$(2)\ da_j - db_2 \le 0.10\ \mu m$$

   provided that in the relation of $3 \le j_{min} \le (L - 20)/10$, a decimal point or less of $(L - 20)/10$ is truncated.

9. The hollow fiber membrane according to claim 8, wherein

   a relation of $j_{min} \le L \times 0.5/10$ is satisfied,
   provided that in the relation of $j_{min} \le L \times 0.5/10$, a decimal point or less of $L \times 0.5/10$ is truncated.

10. The hollow fiber membrane according to claim 8 or 9, wherein

    the number of throats $Na_n$ in the region $Sa_n$ and the number of throats $Nb_n$ in the region $Sb_n$ obtained by the pore network model analysis satisfy a relation of $Na_1 < Nb_2$, and
    a minimum value $k_{min}$ of a natural number $k$ satisfying the following conditions (3) and (4) satisfies a relation of $3 \le k_{min} < (L - 20)/10$,

$$(3)\ Na_1/Na_k \le 0.90$$

$$(4)\ Nb_2 - Na_k \le 400$$

    provided that in the relation of $3 \le k_{min} \le (L - 20)/10$, a decimal point or less of $(L - 20)/10$ is truncated, and
    an analysis region in the analysis is a cuboid including an arbitrary 50 $\mu$m square of the first surface and 50 $\mu$m square of the second surface facing the first surface.

11. The hollow fiber membrane according to any one of claims 8 to 10, wherein
    a relation of $0.10\ \mu m < db_2 < 10.0\ \mu m$ is satisfied.

12. The hollow fiber membrane according to any one of claims 1 to 11, wherein

    the spherical structure comprises a polyvinylidene fluoride-based resin,
    a hydrophilic polymer is present on a surface and inside of the spherical structure, and
    the hydrophilic polymer is contained in an amount of 1.0 parts by mass or more with respect to 100 parts by mass of the polyvinylidene fluoride-based resin.

13. The hollow fiber membrane according to claim 12, wherein

a percentage of a ratio P1/P0 of P1 to P0 is 70% or less, where P1 is a ratio (mass%) of the hydrophilic polymer to the polyvinylidene fluoride-based resin after the hollow fiber membrane is immersed in a 3,000 ppm of aqueous sodium hypochlorite solution (pH 12.5) at 60°C for 30 hours, and P0 is a ratio (mass%) of the hydrophilic polymer to the polyvinylidene fluoride-based resin before the immersion.

14. A method for manufacturing a hollow fiber membrane, the method comprising:

(a) a step of dissolving a polyvinylidene fluoride-based resin in a poor solvent to obtain a polyvinylidene fluoride-based resin solution;
(b) a step of maintaining the polyvinylidene fluoride-based resin solution at a temperature at which primary nucleus formation progresses;
(c) a step of discharging the polyvinylidene fluoride-based resin solution in a hollow fiber shape through a pipe and a spinneret, and applying a temperature gradient to the polyvinylidene fluoride-based resin solution in a thickness direction thereof in at least one of the pipe or the spinneret, after step (b); and
(d) a step of immersing the polyvinylidene fluoride-based resin solution in a cooling bath, thereby solidifying the polyvinylidene fluoride-based resin solution by solid-liquid type thermally induced phase separation, after step (c), wherein

a temperature gradient $\Delta T$ (°C) applied in step (c) and a time t (sec) for applying the temperature gradient satisfy a relation of $50 \leq \Delta T \times t \leq 300$.

15. The method for manufacturing a hollow fiber membrane according to claim 14, wherein
in step (c), with respect to a thickness L of a layer of a spherical structure, a thickness Ls of the polyvinylidene fluoride-based resin to which the temperature gradient is applied satisfies a relation of $5 < Ls/L < 40$.

16. The method for manufacturing a hollow fiber membrane according to claim 14 or 15, wherein
a temperature T2 (°C) in step (b), a temperature T4 (°C) in the cooling bath in step (d), and a crystallization temperature Tc (°C) of the polyvinylidene fluoride-based resin satisfy a relation of $(Tc - T4)/(T2 - T4) < 0.50$.

17. The method for manufacturing a hollow fiber membrane according to claim 16, wherein
a relation of $15 < Tc - T4 < 35$ is satisfied.

18. The method for manufacturing a hollow fiber membrane according to any one of claims 14 to 17, the method further comprising the following steps (e) and (f) after step (d):

(e) a step of introducing a hydrophilic polymer into the hollow fiber membrane; and
(f) a step of performing heat treatment at 100°C or higher after step (e).

19. The method for manufacturing a hollow fiber membrane according to claim 18, wherein
in step (e), after an aqueous solution in which the hydrophilic polymer is dissolved is passed through the hollow fiber membrane, radiation ray irradiation is performed.

# FIG. 1

FIG. 2

FIG. 3

FIG. 3

EP 4 331 714 A1

*FIG. 4A*

*FIG. 4B*

FIG. 5

FIG. 6

FIG. 7

FIG. 8

## INTERNATIONAL SEARCH REPORT

| | International application No. |
|---|---|
| | **PCT/JP2022/019447** |

**A.    CLASSIFICATION OF SUBJECT MATTER**

*B01D 69/00*(2006.01)i; *B01D 69/08*(2006.01)i; *B01D 71/10*(2006.01)i; *B01D 71/34*(2006.01)i; *B01D 71/38*(2006.01)i;
*B01D 71/40*(2006.01)i; *B01D 71/44*(2006.01)i; *B01D 71/52*(2006.01)i; *D01F 6/00*(2006.01)i; *D01F 6/08*(2006.01)i;
*D01F 6/12*(2006.01)i; *C08J 9/28*(2006.01)i; *C08J 9/42*(2006.01)i
FI:    B01D69/08; B01D69/00; B01D71/34; D01F6/00 B; D01F6/12 Z; D01F6/08 Z; B01D71/10; B01D71/38; B01D71/40;
B01D71/44; B01D71/52; C08J9/28 101; C08J9/42 CEW

According to International Patent Classification (IPC) or to both national classification and IPC

**B.    FIELDS SEARCHED**

Minimum documentation searched (classification system followed by classification symbols)

B01D69/00; B01D69/08; B01D71/10; B01D71/34; B01D71/38; B01D71/40; B01D71/44; B01D71/52; D01F6/00; D01F6/08;
D01F6/12; C08J9/28; C08J9/42

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); Japio-GPG/FX

**C.    DOCUMENTS CONSIDERED TO BE RELEVANT**

| Category* | Citation of document, with indication, where appropriate, of the relevant passages | Relevant to claim No. |
|---|---|---|
| X | WO 2016/006611 A1 (TORAY INDUSTRIES, INC.) 14 January 2016 (2016-01-14) paragraphs [0001]-[0102], fig. 1-4 | 1-7, 14-17 |
| Y | | 12-13, 18-19 |
| Y | JP 2019-130522 A (TORAY INDUSTRIES, INC.) 08 August 2019 (2019-08-08) paragraphs [0001]-[0176], fig. 1-3 | 12-13, 18-19 |
| A | WO 2003/031038 A1 (TORAY INDUSTRIES, INC.) 17 April 2003 (2003-04-17) claims 1-20 | 1-19 |
| A | WO 2014/054658 A1 (JNC CORP.) 10 April 2014 (2014-04-10) claims 1-11 | 1-19 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 May 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/019447**

| Patent document cited in search report | Publication date (day/month/year) | Patent family member(s) | Publication date (day/month/year) |
|---|---|---|---|
| WO 2016/006611 A1 | 14 January 2016 | US 2017/0157572 A1 paragraphs [0001]-[0199], fig. 1-4 CN 106536029 A KR 10-2017-0028327 A | |
| JP 2019-130522 A | 08 August 2019 | (Family: none) | |
| WO 2003/031038 A1 | 17 April 2003 | US 2003/0094409 A1 claims 1-20 EP 1435261 A1 CA 2433786 A1 KR 10-0904943 B1 CN 1481272 A | |
| WO 2014/054658 A1 | 10 April 2014 | US 2015/0328593 A1 claims 1-11 EP 2905068 A1 CN 104684633 A KR 10-2015-0064059 A | |

Form PCT/ISA/210 (patent family annex) (January 2015)

**EP 4 331 714 A1**

**Patent documents cited in the description**

- WO 2015146469 A
- WO 2016006611 A
- JP 2021075668 A
- JP 2021108523 A
- JP 2021138656 A